# EUROPEAN PATENT APPLICATION

(11) **EP 4 679 279 A1**
(43) Date of publication of application: **14.01.2026**
(21) Application number: 25189069.5
(22) Date of filing: 11.07.2025
(51) Int. Cl.: G06F 13/40, G06F 13/42

(54) **SERIAL INTERFACE WITH CLOCK-DATA SWAP CAPABILITY**

(30) Priority: 12.07.2024 US 202463670624 P
(71) Applicant: Space Exploration Technologies Corp., Hawthorne, California 90250 (US)
(72) Inventor: JACQUET, David Francois, Hawthorne, 90250 (US); DIDION, Julien, Hawthorne, 90250 (US); BUTAYE, Benoit, Hawthorne, 90250 (US); ROULENQ, Olivier, Hawthorne, 90250 (US)
(74) Representative: Mewburn Ellis LLP

(57) **Abstract**

Systems and techniques for providing clock-data swap capability for a communication interface are disclosed. A method includes obtaining a clock-data swap check command; determining, based on processing the clock-data swap check command, that an external clock-data swapped state is present at an external clock port of a WM and an external data port of the WM, wherein the external clock port is coupled to a first external serial signal and the external data port is coupled to a second external serial signal; and selecting, based on determining that the external clock-data swapped state is present at the external clock port and the external data port, an internal clock-data swapped configuration for a crossbar circuit. The crossbar circuit is selectably configurable to couple the WM in an internal clock-data swapped configuration or couple the WM in an internal clock-data non-swapped configuration.

## Description

### TECHNICAL FIELD

The present disclosure generally relates to serial interfaces. More specifically, the present disclosure relates to systems and techniques for implementing clock-data swap capability for serial interfaces.

### BACKGROUND

Serial communication interfaces can advantageously be used to communicate using a limited number of signals. In some applications, the number of signals that can be used for communication can be limited by a number of available package pins. In some cases, increasing the number of package pins may require increasing package size of individual integrated circuit (IC) chips. In some applications, package size for individual IC chips may be limited by constraints on area, routing, uniformity, spacing, or the like.

It would be advantageous to configure serial communication interfaces and associated circuitry having increased reliability, reduced weight, reduced size, lower manufacturing cost, and/or lower power requirements. Accordingly, embodiments of the present disclosure are directed to these and other improvements in serial communication interfaces or portions thereof.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with one embodiment of the present disclosure, a method for providing clock-data swap capability for synchronous serial interfaces is disclosed. The method includes obtaining a clock-data swap check command; determining, based on processing the clock-data swap check command, that an external clock-data swapped state is present at an external clock port of a WM and an external data port of the WM, wherein the external clock port is coupled to a first external serial signal and the external data port is coupled to a second external serial signal; and selecting, based on determining that the external clock-data swapped state is present at the external clock port and the external data port, an internal clock-data swapped configuration for a crossbar circuit, wherein the crossbar circuit is selectably configurable to: couple the external clock port to an internal data port of the WM and couple the external data port to an internal clock port of the WM in an internal clock-data swapped configuration; or couple the external clock port to the internal clock port and couple the external data port to the internal data port in an internal clock-data non-swapped configuration.

In accordance with another embodiment of the present disclosure, an apparatus for providing clock-data swap capability for synchronous serial interfaces is disclosed. The apparatus includes an external clock port coupled to a first external serial signal; an external data port coupled to a second external serial signal; an internal clock port; an internal data port; a crossbar circuit selectably configurable to: couple the external clock port to the internal data port and couple the external data port to the internal clock port in an internal clock-data swapped configuration; or couple the external clock port to the internal clock port and couple the external data port to the internal data port in an internal clock-data non-swapped configuration; and a clock-data swap detection circuit and configured to: obtain a clock-data swap check command; determine, based on processing the clock-data swap check command, that an external clock-data swapped state is present at the external clock port and the external data port; and select, based on determining that the external clock-data swapped state is present at the external clock port and the external data port, the internal clock-data swapped configuration for the crossbar circuit.

In another example, a non-transitory computer-readable medium is provided that has stored thereon instructions that, when executed by one or more processors, cause the one or more processors to: obtain a clock-data swap check command; determine, based on processing the clock-data swap check command, that an external clock-data swapped state is present at an external clock port of a WM and an external data port of the WM, wherein the external clock port is coupled to a first external serial signal and the external data port is coupled to a second external serial signal; and select, based on determining that the external clock-data swapped state is present at the external clock port and the external data port, an internal clock-data swapped configuration for a crossbar circuit, wherein the crossbar circuit is selectably configurable to: couple the external clock port to an internal data port of the WM and couple the external data port to an internal clock port of the WM in an internal clock-data swapped configuration; or couple the external clock port to the internal clock port and couple the external data port to the internal data port in an internal clock-data non-swapped configuration.

In accordance with another embodiment of the present disclosure, an apparatus for providing clock-data swap capability for synchronous serial interfaces is disclosed. The apparatus includes means for obtaining a clock-data swap check command; means for determining, based on processing the clock-data swap check command, that an external clock-data swapped state is present at an external clock port of a WM and an external data port of the WM, wherein the external clock port is coupled to a first external serial signal and the external data port is coupled to a second external serial signal; and means for selecting, based on determining that the external clock-data swapped state is present at the external clock port and the external data port, an internal clock-data swapped configuration for a crossbar circuit, wherein the crossbar circuit is selectably configurable to: couple the external clock port to an internal data port of the WM and couple the external data port to an internal clock port of the WM in an internal clock-data swapped configuration; or couple the external clock port to the internal clock port and couple the external data port to the internal data port in an internal clock-data non-swapped configuration.

In accordance with one embodiment of the present disclosure, a method for assigning addresses to worker modules (WMs) is disclosed. The method includes transmitting a clock signal by an external clock signal line, wherein the external clock signal line is coupled to a first WM clock port of a first WM and a second WM data port of a second WM; transmitting a data signal by an external data signal line, wherein the external data signal line is coupled to a first WM data port of the first WM and a second WM clock port of the second WM; and assigning, based on transmitting the clock signal and the data signal, a first WM address to a first WM and a second WM address to a second WM, wherein: the first WM and the second WM are provided with clock-data swap capability; and the first WM address is different from the second WM address. In accordance with another embodiment of the present disclosure, an apparatus for assigning addresses to worker modules WMs is disclosed. The apparatus includes a first WM comprising a first WM clock port coupled to an external clock signal line and a first WM data port coupled to an external data signal line, wherein the first WM is provided with clock-data swap capability; a second WM comprising a second WM clock port coupled to the external data signal line and a second WM data port coupled to the external clock signal line, wherein the second WM is provided with clock-data swap capability; and a command module (CM) comprising a CM clock port configured to drive the external clock signal line with a clock signal and a CM data port configured to drive the external data signal line with a data signal, wherein the CM is configured to assign a first WM address to the first WM and a second WM address to the second WM, wherein the second WM address is different from the first WM address.

In another example, a non-transitory computer-readable medium is provided that has stored thereon instructions that, when executed by one or more processors, cause the one or more processors to: transmit a clock signal by an external clock signal line, wherein the external clock signal line is coupled to a first WM clock port of a first WM and a second WM data port of a second WM; transmit a data signal by an external data signal line, wherein the external data signal line is coupled to a first WM data port of the first WM and a second WM clock port of the second WM; and assign, based on transmitting the clock signal and the data signal, a first WM address to a first WM and a second WM address to a second WM, wherein: the first WM and the second WM are provided with clock-data swap capability; and the first WM address is different from the second WM address.

In accordance with another embodiment of the present disclosure, an apparatus for assigning addresses to worker modules WMs is disclosed. The apparatus includes means for transmitting a clock signal by an external clock signal line, wherein the external clock signal line is coupled to a first WM clock port of a first WM and a second WM data port of a second WM; means for transmitting a data signal by an external data signal line, wherein the external data signal line is coupled to a first WM data port of the first WM and a second WM clock port of the second WM; and means for assigning, based on transmitting the clock signal and the data signal, a first WM address to a first WM and a second WM address to a second WM, wherein: the first WM and the second WM are provided with clock-data swap capability; and the first WM address is different from the second WM address.

In accordance with one embodiment of the present disclosure, a method for providing a communication interface with swappable clock and data signals is disclosed. The method includes obtaining a clock-data swap check command; determining, based on processing the clock-data swap check command, that an external clock-data non-swapped state is present at an external clock port of a WM and an external data port of the WM, wherein the external clock port is coupled to a first external serial signal and the external data port is coupled to a second external serial signal; and selecting, based on determining that the external clock-data non-swapped state is present at the external clock port and the external data port, an internal clock-data non-swapped configuration for a crossbar circuit, wherein the crossbar circuit is selectably configurable to: couple the external clock port to an internal data port of the WM and couple the external data port to an internal clock port of the WM in an internal clock-data swapped configuration; or couple the external clock port to the internal clock port and couple the external data port to the internal data port in an internal clock-data non-swapped configuration.

In accordance with another embodiment of the present disclosure, an apparatus for providing a communication interface with swappable clock and data signals is disclosed. The apparatus includes an external clock port coupled to a first external serial signal; an external data port coupled to a second external serial signal; an internal clock port; an internal data port; a crossbar circuit selectably configurable to: couple the external clock port to the internal data port and couple the external data port to the internal clock port in an internal clock-data swapped configuration; or couple the external clock port to the internal clock port and couple the external data port to the internal data port in an internal clock-data non-swapped configuration; and a clock-data swap detection circuit and configured to: obtain a clock-data swap check command; determine, based on processing the clock-data swap check command, that an external clock-data non-swapped state is present at the external clock port and the external data port; and select, based on determining that the external clock-data non-swapped state is present at the external clock port and the external data port, the internal clock-data non-swapped configuration for the crossbar circuit.

In another example, a non-transitory computer-readable medium is provided that has stored thereon instructions that, when executed by one or more processors, cause the one or more processors to: obtain a clock-data swap check command; determine, based on processing the clock-data swap check command, that an external clock-data non-swapped state is present at an external clock port of a WM and an external data port of the WM, wherein the external clock port is coupled to a first external serial signal and the external data port is coupled to a second external serial signal; and select, based on determining that the external clock-data non-swapped state is present at the external clock port and the external data port, an internal clock-data non-swapped configuration for a crossbar circuit, wherein the crossbar circuit is selectably configurable to: couple the external clock port to an internal data port of the WM and couple the external data port to an internal clock port of the WM in an internal clock-data swapped configuration; or couple the external clock port to the internal clock port and couple the external data port to the internal data port in an internal clock-data non-swapped configuration.

**In** accordance with another embodiment of the present disclosure, an apparatus for providing a communication interface with swappable clock and data signals is disclosed. The apparatus includes means for obtaining a clock-data swap check command; means for determining, based on processing the clock-data swap check command, that an external clock-data non-swapped state is present at an external clock port of a WM and an external data port of the WM, wherein the external clock port is coupled to a first external serial signal and the external data port is coupled to a second external serial signal; and means for selecting, based on determining that the external clock-data non-swapped state is present at the external clock port and the external data port, an internal clock-data non-swapped configuration for a crossbar circuit, wherein the crossbar circuit is selectably configurable to: couple the external clock port to an internal data port of the WM and couple the external data port to an internal clock port of the WM in an internal clock-data swapped configuration; or couple the external clock port to the internal clock port and couple the external data port to the internal data port in an internal clock-data non-swapped configuration.

### BRIEF DESCRIPTION OF THE DRAWINGS

In order to describe the manner in which the various advantages and features of the disclosure can be obtained, a more particular description of the principles described above will be rendered by reference to specific embodiments thereof, which are illustrated in the appended drawings. Understanding that these drawings depict only example embodiments of the disclosure and are not to be considered to limit its scope, the principles herein are described and explained with additional specificity and detail through the use of the drawings in which:
FIG. 1 illustrates an example configuration for serial communication signal routing from a command module to worker modules, in accordance with some examples of the present disclosure;
FIG. 2A illustrates an example signal routing configuration for coupling clock and data lines to flipped worker modules with a cross-connection, in accordance with some examples of the present disclosure;
FIG. 2B illustrates an example signal routing configuration for coupling clock and data lines to flipped worker modules without a cross-connection by utilizing a clock-data swap, in accordance with some examples of the present disclosure;
FIG. 2C illustrates an additional example signal routing configuration for coupling clock and data lines to flipped chains of serially connected worker modules without a cross-connection by utilizing a clock-data swap, in accordance with some examples of the present disclosure;
FIG. 3A is a schematic diagram illustrating an example configuration for a worker module including an example clock-data swap detection circuit, in accordance with some examples of the present disclosure;
FIG. 3B is a schematic diagram illustrating an additional example configuration for a worker module including an example clock-data swap detection circuit, in accordance with some examples of the present disclosure;
FIG. 4A illustrates an example timing waveform for a clock-data swap check command and corresponding response of the clock-data swap detection circuit of FIG. 3B for a clock-data non-swapped worker module, in accordance with some examples of the present disclosure;
FIG. 4B illustrates an example timing waveform for a clock-data swap check command and corresponding response of the clock-data swap detection circuit of FIG. 3B for a clock-data swapped worker module, in accordance with some examples of the present disclosure;
FIG. 4C illustrates an example timing waveform for a register write command and corresponding response of the clock-data swap detection circuit of FIG. 3B for a clock-data non-swapped worker module, in accordance with some examples of the present disclosure;
FIG. 5A is a flow diagram illustrating a process for providing clock-data swap capability for a serial communication interface, in accordance with some examples of the present disclosure;
FIG. 5B is an additional flow diagram illustrating a process for providing clock-data swap capability for a serial communication interface, in accordance with some examples of the present disclosure;
FIG. 5C is a flow diagram illustrating a process for assigning addresses to worker modules (WMs), in accordance with some examples of the present disclosure;
FIG. 6 is a diagram illustrating an example computing device architecture, in accordance with some examples of the present disclosure.

### DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

The ensuing description provides example embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the application as set forth in the appended claims.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Language such as "top", "bottom", "upper", "lower", "vertical", "horizontal", "lateral", in the present disclosure is meant to provide orientation for the reader with reference to the drawings and is not intended to be the required orientation of the components or to impart orientation limitations into the claims.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

In some aspects, systems, apparatuses, processes (also referred to as methods), and computer-readable media (collectively referred to herein as "systems and techniques") are described herein for providing a synchronous serial interface with clock-data swap capability.

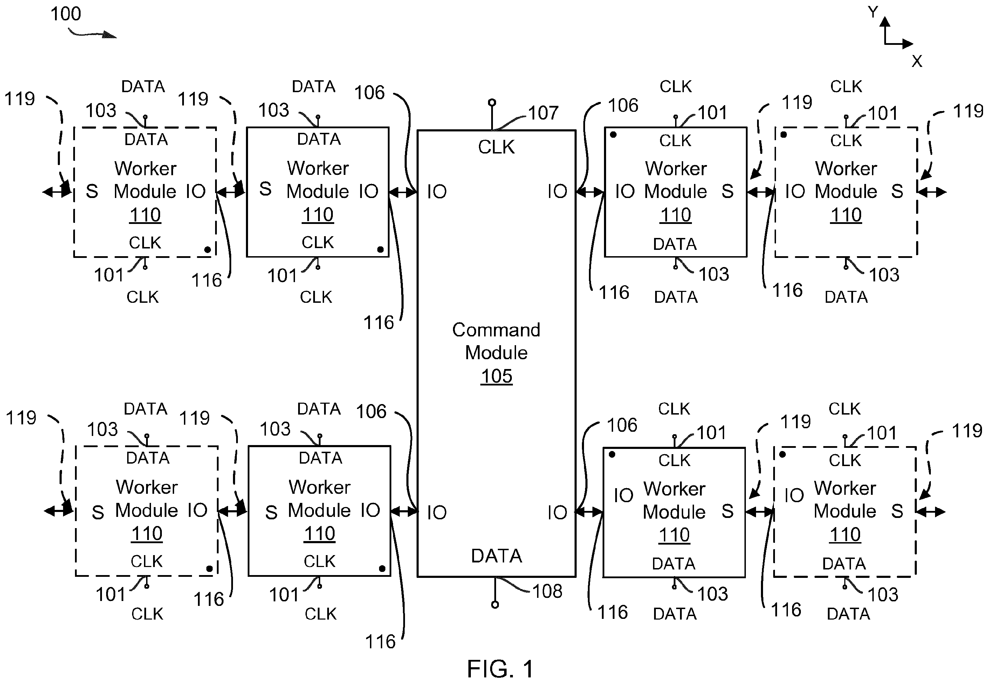

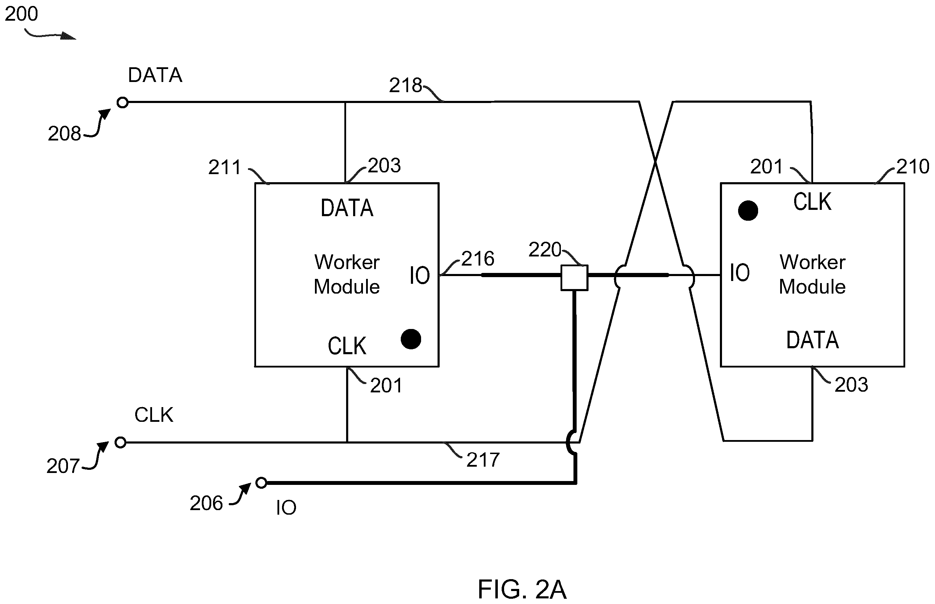

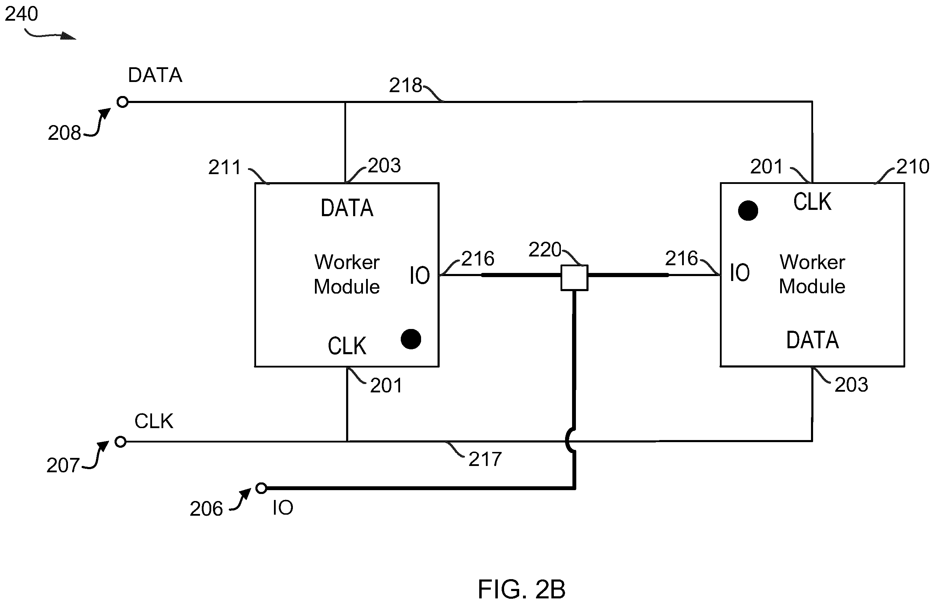

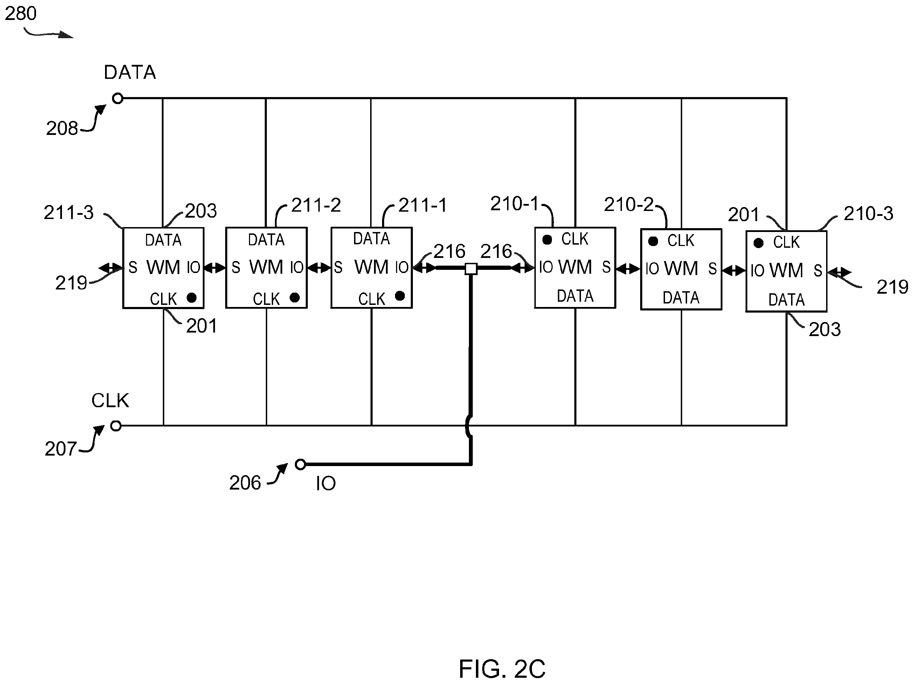

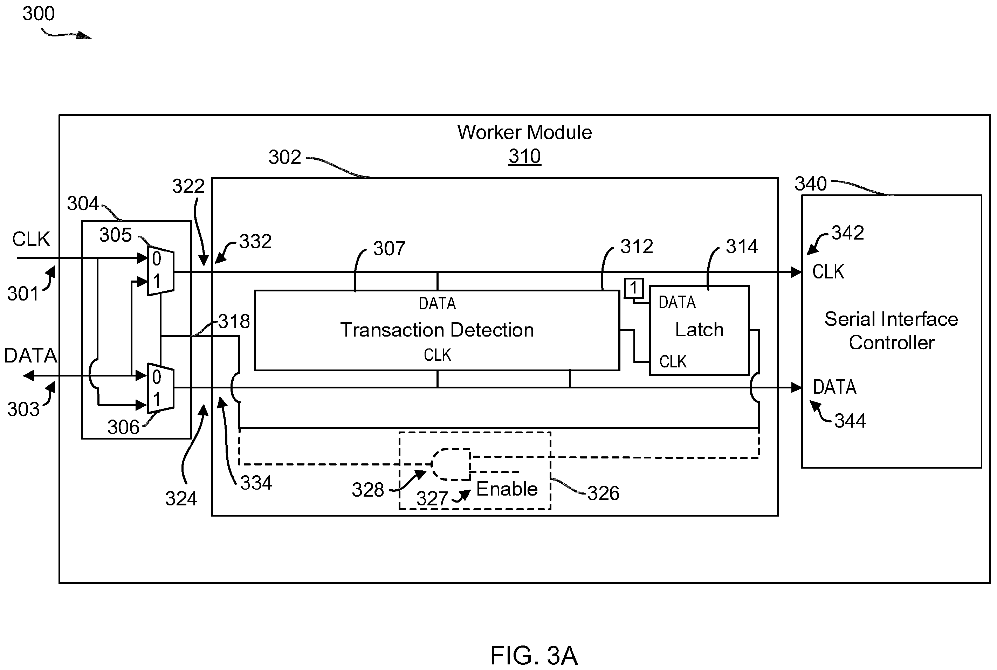

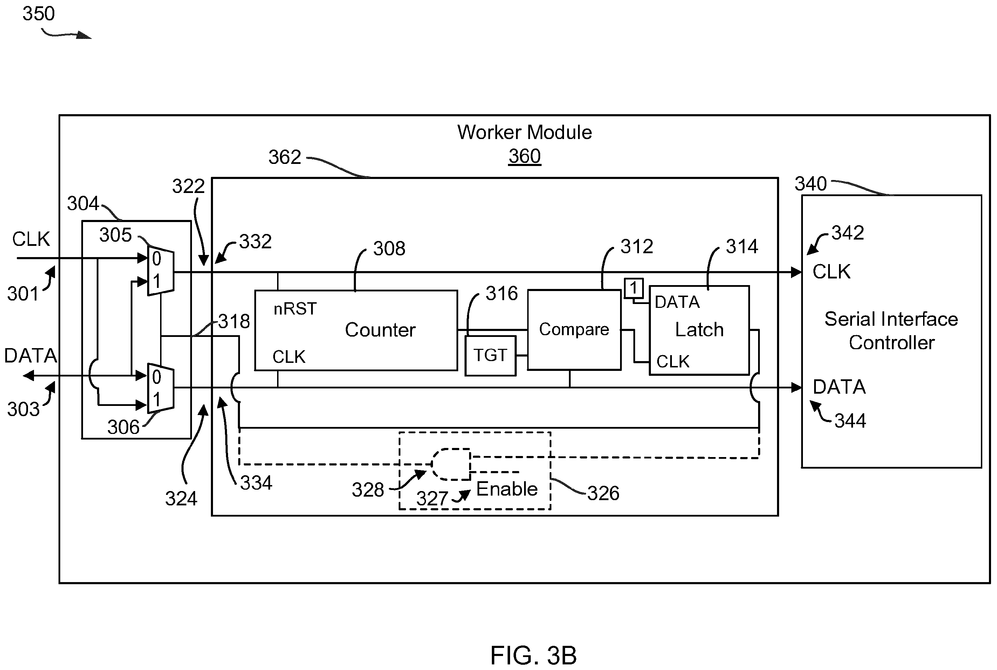

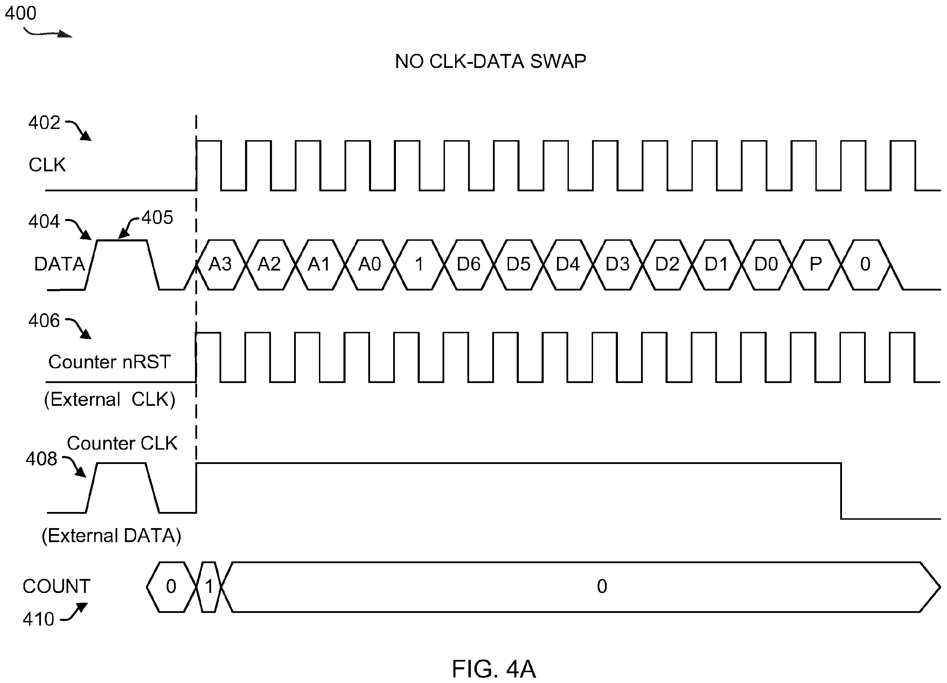

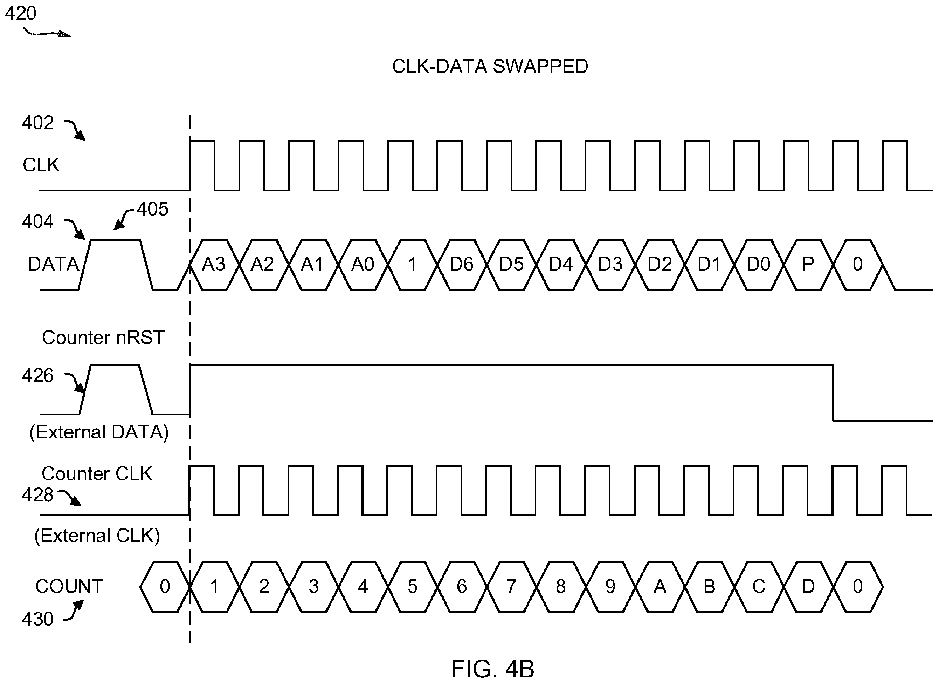

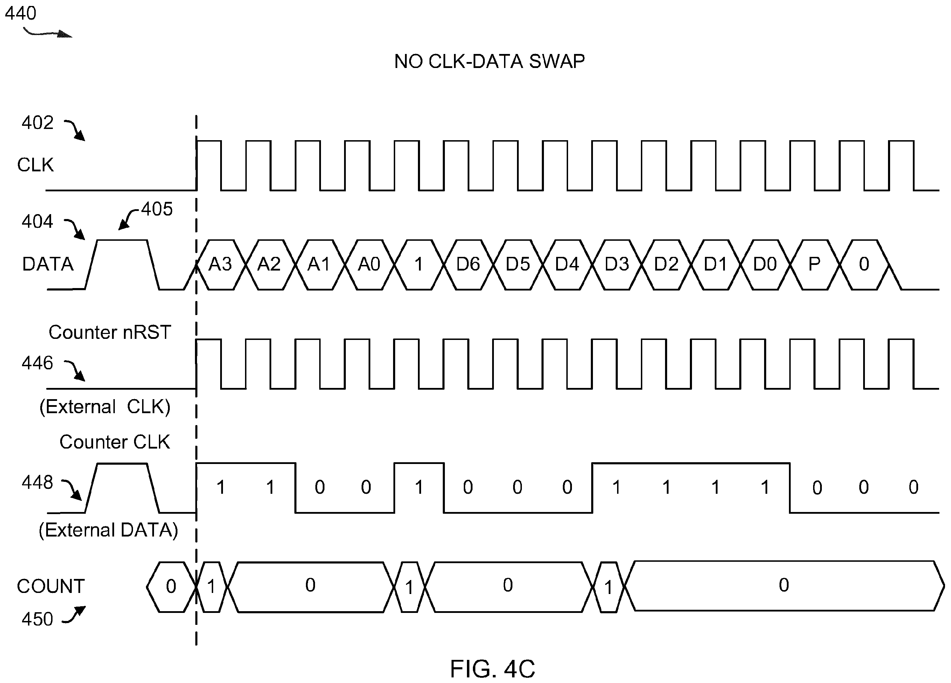

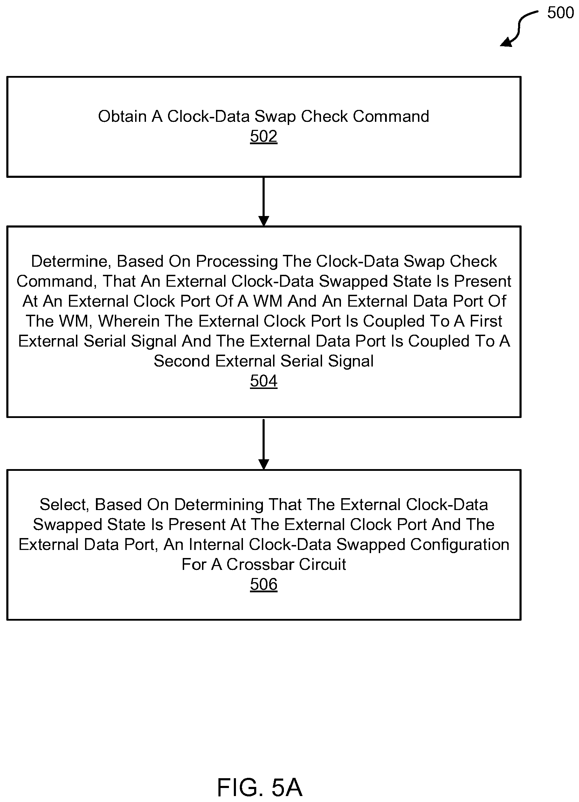

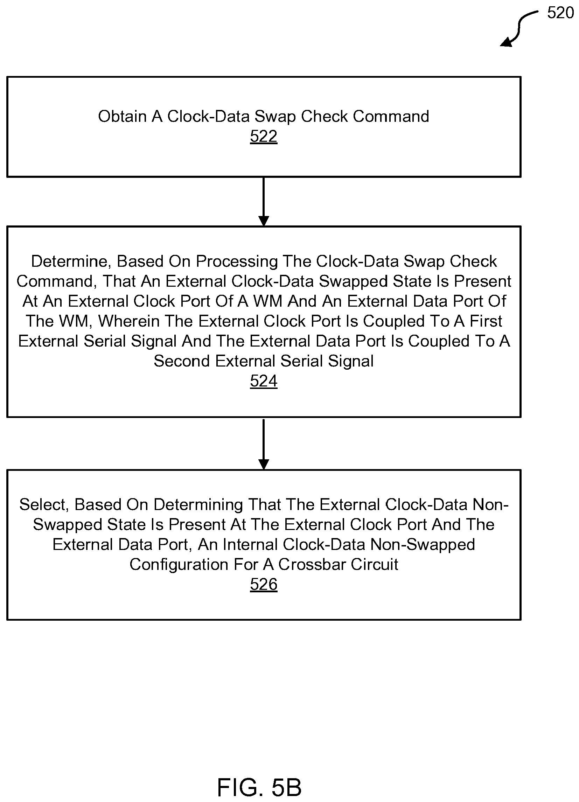

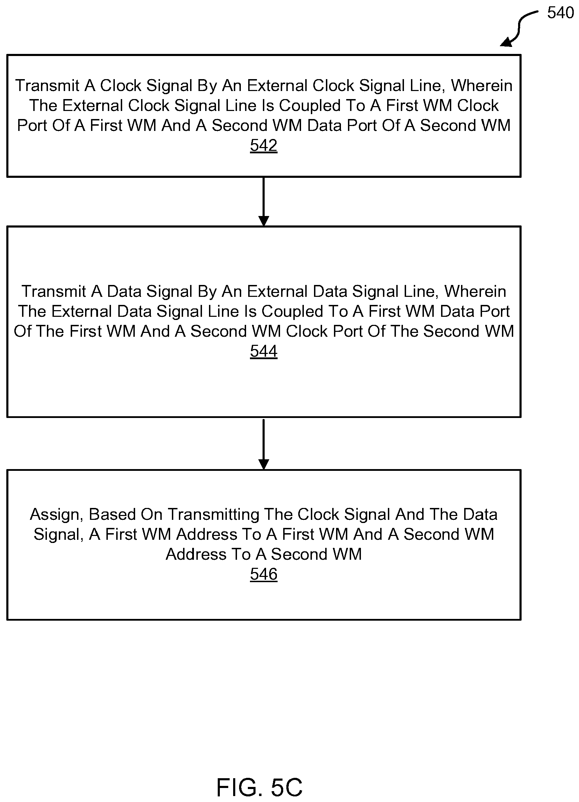

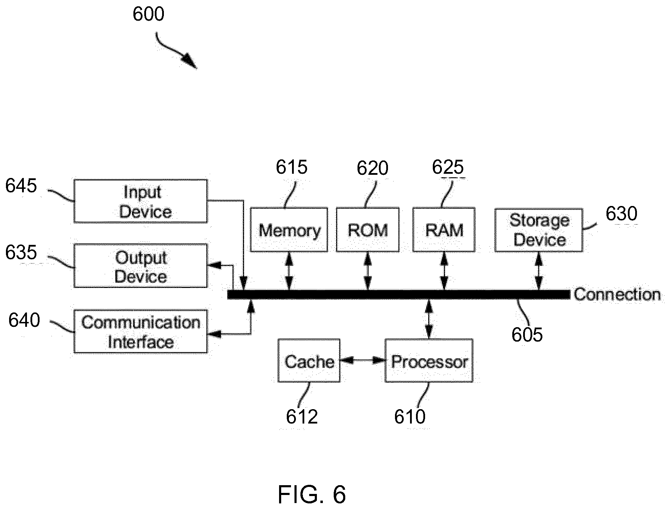

The disclosed systems and techniques will be described in the following disclosure as follows. The discussion begins with a description of an example configuration for serial communication signal routing from a command module to worker modules, as illustrated in FIG. 1. An example signal routing configuration for coupling clock and data lines to flipped worker modules with a cross-connection, as illustrated in FIG. 2A, will then follow. An example signal routing configuration for coupling clock and data lines to flipped worker modules without a cross-connection by utilizing a clock-data swap, as illustrated in FIG. 2B, will then follow. An additional example signal routing configuration for coupling clock and data lines to flipped chains of serially connected worker modules without a cross-connection by utilizing a clock-data swap, as illustrated in FIG. 2C, will then follow. A schematic diagram illustrating an example configuration for a worker module including an example clock-data swap detection circuit, as illustrated in FIG. 3A, will then follow. A schematic diagram illustrating an additional example configuration for a worker module including an additional example clock-data swap detection circuit, as illustrated in FIG. 3B, will then follow. An example timing waveform for a clock-data swap check command and corresponding response of the clock-data swap detection circuit of FIG. 3B for a clock-data non-swapped worker module, as illustrated in FIG. 4A, will then follow. An example timing waveform for a clock-data swap check command and corresponding response of the clock-data swap detection circuit of FIG. 3B for a clock-data swapped worker module, as illustrated in FIG. 4B, will then follow. An example timing waveform for a register write command and corresponding response of the clock-data swap detection circuit of FIG. 3B for a clock-data non-swapped worker module, as illustrated in FIG. 4C, will then follow. A flow diagram illustrating a process for detecting clock-data swaps for a serial communication interface, as illustrated in FIG. 5A, will then follow. An additional flow diagram illustrating a process for detecting clock-data swaps for a serial communication interface, as illustrated in FIG. 5B, will then follow. a flow diagram illustrating a process for assigning addresses to worker modules (WMs), as illustrated in FIG. 5C, will then follow. The discussion concludes with a description of an example computing and architecture including example hardware components that can be implemented with phased array antennas and other electronic systems, as illustrated in FIG. 6. The disclosure now turns to FIG. 1.

FIG. 1 illustrates an example configuration 100 for serial communication signal routing between a command module 105 and worker modules 110. In some cases, command module 105 can include various components (not shown) that are used to communicate with worker modules 110. For example, the command module 105 can include components for coordinating the operation of the worker modules 110. In some cases, the command module 105 can communicate with the worker modules 110 over a two-wire serial interface. In some implementations, the command module 105 can include a plurality of input/output (IO) ports 106, a clock port 107, and a data port 108. In some cases, the command module 105 can be implemented as an integrated circuit (IC) chip and the IO ports 106, clock port 107, and data port 108 can correspond to individual pins of the IC chip.

In the illustrated example of FIG. 1, the worker modules 110 each include a clock port 101, a data port 103, and an IO port 116. As illustrated in FIG. 1, optional serially connected worker modules 110 are shown with dashed outlines. As illustrated, serial IO ports 119 of the worker modules 110 having IO ports 116 coupled to IO ports 106 of the command module 105 can be coupled to IO ports 116 of the serially connected worker modules. In some cases, additional worker modules 110 can be chained together by connections between a serial IO port 119 of one worker module and an IO port 116 of a subsequent worker module in the chain. In some examples, the worker modules 110 can be implemented as IC chips and the clock ports 101, data ports 103, and IO ports 116 can correspond to individual pins of the IC chips of the worker modules 110.

As noted above, in some cases, the command module 105 can be configured to communicate with the worker modules 110 over a two-wire serial interface using the clock port 107 and the data port 108. In one illustrative example, the command module 105 can communicate with the worker modules 110 according to the mobile industries processor interface (MIPI) system power management interface (SPMI) protocol. In some cases, the command module 105 can communicate with the worker modules 110 according to one or more additional standards that are compatible with and/or developed based on the MIPI SPMI protocol, such as the MIPI radio frequency front-end (RFFE) protocol.

In the illustrated example of FIG. 1, each of the IO ports 106 of the command module 105 is coupled to a corresponding IO port 116 of a single worker module 110. However, in some cases, one or more IO ports 106 of the command module 105 may be coupled to IO ports 106 of multiple worker modules. In some cases, a combiner/divider (e.g., combiner divider 220 of FIG. 2A through FIG. 2C) can be utilized for sharing an IO port 106 of the command module 105 among two or more worker modules 110.

As illustrated in FIG. 1, worker modules 110 on opposite sides of the command module 105 may have different orientations to allow for convenient routing between the IO ports 106 of the command module 105 and respective IO ports 116 of the worker modules 110. For example, as illustrated, worker modules 110 with an x-axis position value greater than the command module 105 (e.g., on the right-hand side) may be oriented with a first orientation indicated by an alignment marking dot between the clock port 101 and the IO port 116. In contrast, the worker modules 110 with an x-axis position value less than the command module 105 (e.g., on the left-hand side) may be oriented with a 180-degree relative rotation as indicated by the alignment marking dot between the clock port 101 and the IO port 116. As shown in FIG. 1, the 180 degree rotation may result in a mix of clock ports 101 and data ports 103 of the worker modules 110 at a same y-axis position (e.g., in the same "row").

In some cases, the command module 105 may broadcast instructions to all of the worker modules simultaneously using only the clock port 107 and the data port 108. In some cases, a continuous connection can be provided between the clock port 107 of the command module 105 and all of the clock ports 101 of the worker modules 110. Similarly, in some examples, a continuous connection can be provided between data port 108 of the command module 105 and all of the data ports 103 of the worker modules 110. In some cases, interconnections (e.g., metal traces) between the clock ports 101 and/or data ports 103 of the worker modules 110 may overlap one or more times in order to maintain a continuous connection. In some cases, such an overlap may necessitate the use of multiple routing layers of a printed circuit board (PCB) to allow the routing layers to cross. In some examples, the use of multiple PCB layers for routing the clock and data signals may increase the total number of layers in a PCB which may add weight, cost, and/or complexity to a system design.

FIG. 2A illustrates an example signal routing configuration 200 for routing clock (CLK) lines and data (DATA) lines to worker modules 210, 211 with flipped orientations using crossing connections. In the example signal routing configuration 200 of FIG. 2A, worker modules 210, 211 are not configured with a clock-data swap capability. In some cases, the worker modules 210, 211 can be included in an array of hundreds or thousands of worker modules (not shown). In the illustrative example of FIG. 2A, a first worker module 210 and a second worker module 211 can correspond to front-end modules (FEMs) and/or analog beamformers of a phased array antenna system.

In the illustrated example of FIG. 2A, the worker modules 210, 211 can communicate with a command module (e.g., command module 105 of FIG. 1) over a two-wire serial communication interface. In some cases, the data ports 203 of the worker modules 210, 211 can be coupled to a data port 208 of a command module (e.g., command module 105 of FIG. 1) by a data signal routing trace 217. Similarly, the clock ports 201 of the worker modules 210, 211 can be coupled to a clock port 207 of a command module (e.g., command module 105 of FIG. 1) by a clock signal routing trace 218.

In the illustrated example of FIG. 2A, each worker module 210, 211 has an IO port 216 that can be coupled to an IO port 206 of a command module (e.g., IO port 106 of command module 105 in FIG. 1). In one illustrative example, the IO port 206 can be an RFIO port of a beamformer (BF). In another illustrative example, the IO port 206 can be used to provide a chip select signal for the worker modules 210, 211. In the illustrated example of FIG. 2A, a combiner/divider 220 is provided to allow sharing of the IO port 206 between the two worker modules 210, 211. In one illustrative example, the combiner/divider 220 can be implemented as a Wilkinson combiner/divider. In some implementations, routing paths from IO ports 206 to the respective IO ports 216 of the worker modules 210, 211 can be length and/or impedance matched. In some cases, the IO ports 216 of the worker modules 210, 211 can be operated as chip select ports without departing from the scope of the present disclosure.

In some implementations, each worker module 210, 211 may be assigned an address. In some cases, one or more chip select sources may be used to enumerate identifiers (IDs) for the worker modules. In one illustrative example, a chip select source may include the IO ports 216. In another illustrative example, a chip select source may include a clock-data swap state of each worker module 210, 211. In some implementations, a chip select source can include one or more pins of a worker module 210, 211 coupled to ground (e.g., GND) or power (e.g., VDD) voltages. In some examples, worker modules 210, 211 may have worker module IDs hard coded in each individual worker module.

As shown in FIG. 2A, the worker modules 210, 211 can be oriented with a 180-degree rotation relative to each other as indicated by the alignment marking dot between clock ports 201 and IO ports 216. As shown, the relative rotation of the worker modules 210, 211 can result in the IO ports 216 of the worker modules facing toward each other. In some cases, having IO ports 216 facing the combiner/divider 220 can reduce signal routing complexity, facilitate length matching, and/or facilitate impedance matching.

In the simplified configuration of FIG. 2A, it is possible to route the data routing trace 217 and clock routing trace 218 without crossing. However, in the context of a large array of worker modules (e.g., FEMs of a phased array antenna system) the data routing trace 217 and clock routing trace 218 may be required to cross one another to form a continuous connection between clock ports 201 and a continuous connection between data ports 203 of all of the worker modules in the array (including worker modules 210, 211).

In some implementations, the worker modules 210, 211 may need to be separately addressable to be able receive different commands from a command module. In one illustrative example, the worker modules 210, 211 can be FEMs in a phased array antenna. In some cases, the FEMs may need to be programmable with different gain and/or phase shift values to facilitate beamforming in one or more desired beam directions. In some cases, a command module may not be able to distinguish between the worker modules 210, 211 as the clock ports 201, data ports 203, and IO ports 216 of both worker modules 210, 211 are connected to the clock port 207, data port 208, and IO port 206 of the command module, respectively. In some implementations, another chip select source may be required to distinguish between the worker modules.

Referring to FIG. 1, in some implementations, the worker modules 110 may be provided with a capability to swap the operation of clock ports 101 and data ports 103 such that ports at the same y-axis position (e.g., in the same row) can have identical functionality. As a result, interconnections between the clock ports 101 and data ports 103 may be routed without any overlaps. In some examples, by removing overlaps, the clock and data signals may be routed on a single routing layer of a PCB. It should be understood that although FIG. 1 does not include any combiner/dividers, FIG. 1 does illustrate relative rotation of worker modules 110 positioned on either side of the command module 105 with a relative 180-degree rotation. Accordingly, the principles described herein with respect to FIG. 2A through FIG. 2C may also be applied to the configuration 100 of FIG. 1.

FIG. 2B illustrates an example signal routing configuration 240 for coupling clock and data lines to flipped worker modules without a cross-connection by utilizing a clock-data swap. In the illustration of FIG. 2B, the worker modules 210, 211 may be similar to and perform similar functions to the worker modules 210, 211 of FIG. 2A. However, in the illustrated example of FIG. 2B, the worker modules 210, 211 include a clock-data swap capability that allows the external connections at the clock port 201 and data port 203 to be swapped internally. As a result, the clock routing trace 217 can couple the clock port 207 of a command module (e.g., command module 105 of FIG. 1) to the clock port 201 of worker module 211 and to the data port 203 of the worker module 210. Similarly, the data routing trace 218 can couple the data port 208 of the command module to the data port 203 of the worker module 211 and to the clock port 201 of the worker module 210. In some cases, connections to the clock port 201 and the data port 203 within the worker module 210 can be swapped such that the worker module 210 can receive commands using the externally swapped clock-data connections shown in FIG. 2B. As a result, the clock routing trace 217 and data routing trace 218 can be routed on a single PCB routing layer without crossing over one another.

As noted above with respect to FIG. 2A, in some implementations, the worker modules 210, 211 may need to be separately addressable to be able receive different commands from a command module. In one illustrative example, the worker modules 210, 211 can be FEMs in a phased array antenna. In some cases, the FEMs may need to be programmable with different gain and/or phase shift values to facilitate beamforming in one or more desired beam directions. In some cases, a command module may be able to distinguish between the worker modules 210, 211 on the basis of whether they are operating in an internal clock-data swapped state or an internal clock-data non-swapped state. For example, the command module may configure the worker modules 210, 211 to utilize the corresponding clock-data swap state signal from a clock-data swap detection circuit (e.g., clock-data swap detection circuit 302 of FIG. 3A and/or clock-data swap detection circuit 362 of FIG. 3B) as a chip select signal to distinguish between the two worker modules. In some examples, having access to the clock-data swap state as a chip select source can alleviate the need for an additional chip select source as described with respect to the configuration 200 of FIG. 2A.

FIG. 2C illustrates an additional example signal routing configuration 280 for coupling clock and data lines to flipped chains of serially connected worker modules without a cross-connection by utilizing a clock-data swap. In the illustration of FIG. 2C, the signal routing configuration 280 shows a first serially connected chain of worker modules includes worker module 210-1, worker module 210-2, and worker module 210-3, which are collectively referred to herein as "serially connected worker modules 210." Similarly, the signal routing configuration 280 of FIG. 2C shows a second serially connected chain of worker modules includes worker module 211-1, worker module 211-2, and worker module 211-3, which are collectively referred to herein as "serially connected worker modules 211."

In the illustrated example of FIG. 2C, each of the worker modules 210-1, 210-2, 210-3, 211-1, 211-2, 211-3 has a corresponding clock port 201, data port 203, IO port 216, and serial IO port 219, which can be similar to and perform similar functions to clock ports 101, data ports 103, IO ports 116, and serial IO ports 119, respectively, of the worker modules 110 of FIG. 1. In some cases, a first worker module 210-1, 211-1 in each chain of serially connected worker modules 210, 211 can have an IO port 216 coupled to an IO port of a command module (e.g., command module 105 of FIG. 1).

While the examples of FIG. 2A through FIG. 2C include worker modules 210, 211 with IO ports 216, it should be understood that the systems and techniques for providing clock-data swap capability described herein can be used with worker modules without IO ports 216 and/or with multiple IO ports 216.

In some cases, the clock-data swapping scheme described with respect to FIG. 2B and FIG. 2C may require one or more additional components to allow for detection of whether a particular worker module 210, 211 should internally swap the operation of clock port 201 and data port 203. In some cases, noise, race conditions, and/or other error sources may result in erroneous detection of the clock-data swap state for one or more worker modules 210, 211, which can result in communication failures and/or lead to degraded performance.

In view of the above, systems and techniques are needed for providing clock-data swapping capabilities that include a robust mechanism for clock-data swap detection. Systems and techniques are described herein for providing a robust clock-data swap detection scheme. In some cases, the clock-data swap detection scheme can utilize characteristics of a communication protocol to aid in the detection of swap state with a low likelihood of error.

FIG. 3A illustrates a schematic diagram 300 of an example configuration for a worker module 310 including an example transaction detection module 307. In the illustrated example of FIG. 3A, the worker module 310 includes a crossbar circuit 304, , a latching module 314, and may optionally include a clock-data swap enable module 326. In the illustrated example of FIG. 3A, an internal clock port 322 of the worker module 310 is shown coupled to an output port of a first multiplexer 305 of the crossbar circuit 304, a first port 332 of the clock-data swap detection circuit 302, and a clock port 342 of a serial interface controller 340. Similarly, an internal data port 324 of the worker module 310 is shown coupled to an output port of a second multiplexer 306 of the crossbar circuit 304, a second port 334 of the clock-data swap detection circuit 302, and a data port 344 of the serial interface controller 340.

In some implementations, the two-wire serial interface can provide an external clock signal CLK (e.g., from clock port 107 of command module 105 of FIG. 1) to an external clock port 301 of the worker module 310. In some examples, the two-wire serial interface can provide an external data signal DATA (e.g., from data port 108 of command module 105 of FIG. 1) to an external data port 303 of the worker module 310. In some cases, the two-wire serial interface can be provided for communication between the worker module 310 and a command module (e.g., command module 105 of FIG. 1).

In the illustrated example of FIG. 3A, the clock-data swap detection circuit 302 can be configured to process a clock-data swap check command over the two-wire serial interface (e.g., from command module 105 of FIG. 1). In one illustrative example, the two-wire serial interface can conform to the MIPI SPMI protocol and/or a related protocol such as the MIPI RFFE protocol. As used herein, an external clock-data non-swapped state can refer to a configuration where an external clock signal CLK is coupled to an external clock port 301 of the worker module 310 and an external data signal DATA is coupled to an external data port 303 of the worker module 310. As used herein, an external clock-data swapped state can refer to a configuration where an external data signal DATA is coupled to an external clock port 301 of the worker module 310 and an external clock signal CLK is coupled to an external data port 303 of the worker module 310.

In some cases, based on the outcome of processing the clock-data swap check command, the clock-data swap detection circuit 302 can pass the external clock signal CLK and the external data signal DATA to the serial interface controller 340 in a swapped configuration or a non-swapped configuration. For example, if the clock-data swap detection circuit 302 processes the clock-data swap check command and determines that the external clock signal CLK is connected to the external data port 303 and external data signal DATA is connected to the external clock port 301 (e.g., the external clock-data swapped sate), the clock-data swap detection circuit 302 can swap the clock and data connections internally (e.g., in an internal clock-data swapped sate). In some cases, by swapping the clock and data connections internally, the clock-data swap detection circuit 302 can connect the clock port 342 of the serial interface controller 340 to the external clock signal CLK and can connect data port 344 of the serial interface controller 340 to the external data signal DATA such that the serial interface controller 340 can communicate with the command module (e.g., command module 105 of FIG. 1) in the presence of an external clock-data swapped state.

In another example, if the clock-data swap detection circuit 302 processes the clock-data swap check command and determines that the external clock signal CLK is connected to the clock port 301 and external data signal DATA is connected to the external data port 303 (e.g., the external clock-data non-swapped state), the clock-data swap detection circuit 302 may directly pass the external clock signal CLK and external data signal DATA through (e.g., the internal clock-data swapped state) to the clock port 342 and data port 344 of the serial interface controller 340, respectively.

Accordingly, the clock-data swap detection circuit 302 can correctly connect the clock port 342 of the serial interface controller 340 to the external clock signal CLK input and can correctly connect data port 344 of the serial interface controller 340 to the external data signal DATA in the presence of an external clock-data non-swapped state.

As should be understood from the description above, by providing a clock-data swap detection circuit 302, a worker module 310 may be configurable to detect an external clock-data swapped state and in response configure the worker module 310 with an internal clock-data swapped state and/or to detect an external clock-data non-swapped state and in response configure the worker module 310 with an internal clock-data non-swapped state.

In some implementations, the clock-data swap detection circuit 302 can include a transaction detection module 307 configured to determine whether a clock-data swap check command includes a target number of contiguous cycles of a particular signal level on the data signal of the two-wire interface. For example, the transaction detection module 307 may be configured to determine whether the clock-data swap check command includes a target number of contiguous cycles with a high signal level (e.g., a logical "1"). As another example, the transaction detection module 307 may be configured to determine whether the clock-data swap check command includes a target number of cycles with a low signal level (e.g., a logical "0"). In some implementations, the transaction detection module 307 can be configured to detect any sequence and/or combinations of sequences of cycles of high signal levels and/or low signal levels. In one illustrative example, the transaction detection module 307 can be configured to detect a high signal level for *n*₁ clock cycles, followed by a low signal level for *n*₂ clock cycles, followed by a high signal level for *n*₃ clock cycles, where *n*₁, *n*₂, and *n*₃ are integers.

In some cases, the crossbar circuit 304 can be initialized in a clock-data non-swapped configuration. In some implementations, once the clock-data swap detection circuit 302 determines that the clock-data swap check command indicates an external clock-data swapped state, a swap configuration control signal 318 can be latched to switch the crossbar circuit 304 to the internal clock-data swapped state until the worker module 310 is powered down. In some cases, the clock-data swap check command can be configured such that the counter 308 will not reach the target count 316 when the external swap state and the internal swap state match (e.g., both clock-data swapped or both clock-data non-swapped).

For example, the transaction detection module 307 can be configured to initialize the swap configuration control signal 318 with a logical low value (e.g., logical "0" or "FALSE") value that corresponds to an internal clock-data non-swapped state of the multiplexers 305, 306. In some cases, the multiplexers 305, 306 of the crossbar circuit 304 can be configured to pass a signal received at the external clock port 301 (e.g., CLK) directly through to the internal clock port 322 and passing a signal received at the external data port 303 (e.g., DATA) directly through to the internal data port 324 in the internal clock-data non-swapped state.

In some examples, the crossbar circuit 304 can be initialized in a clock-data swapped configuration. In some implementations, once the clock-data swap detection circuit 302 determines that the clock-data swap check command indicates an external clock-data non-swapped state, a swap configuration control signal 318 can be latched to switch the crossbar circuit 304 to the internal clock-data non-swapped state until the worker module 310 is powered down. In some cases, the clock-data swap check command can be configured such that the counter 308 will not reach the target count 316 when the external swap state and the internal swap state match (e.g., both clock-data swapped or both clock-data non-swapped).

For example, the transaction detection module 307 can be configured to initialize the swap configuration control signal 318 with a logical high output value (e.g., logical "1" or "TRUE") value that corresponds to an internal clock-data swapped state of the multiplexers 305, 306. In some cases, the multiplexers 305, 306 of the crossbar circuit 304 can be configured to swap a signal received at the external clock port 301 (e.g., DATA) to the internal data port 324 and swap a signal received at the external data port 303 (e.g., CLK) to the internal clock port 322 in the internal clock-data swapped state.

In some implementations, an optional clock-data swap enable module 326 can be used to enable or disable clock-data swap functionality for a worker module 310. As illustrated, the clock-data swap enable module 326 could be used with a modified signal path for the swap configuration control signal 318 as indicated by dashed lines. As shown in FIG. 3A, the example clock-data swap enable module 326 can include a digital logic AND gate. As illustrated, one input of the AND gate 328 can be the output of latching module 314 and the other input of the AND gate 328 can be a swap enable signal 327. In some implementations, the swap enable signal 327 can be a one-time programmable value that determines whether a particular worker module 310 has clock-data swap functionality enabled.

In some examples, transaction detection module 307 can have a reset pin coupled to a power-on-reset (POR) signal (not shown) to ensure that the clock-data swap detection circuit 302 initializes in the internal clock-data swapped state. In some implementations, the POR signal can be implemented as an active high POR signal or an active low POR signal (nPOR). In some cases, the serial interface controller 340 may also be reset by the POR (or nPOR) signal.

FIG. 3B illustrates a schematic diagram 350 of a worker module 360 including an example implementation of a transaction detection. In the illustrated example of FIG. 3B, the worker module 360 a includes a crossbar circuit 304, a counter 308, a comparison module 312, a latching module 314, and may optionally include a clock-data swap enable module 326. FIG. 3B illustrates a schematic diagram 300 of an example configuration for a worker module 310 including an example clock-data swap detection circuit 362. In the illustrated example of FIG. 3B, the clock-data swap detection circuit 362 includes a crossbar circuit 304, a counter 308, a comparison module 312, a latching module 314, and may optionally include a clock-data swap enable module 326. In the illustrated example of FIG. 3B, an internal clock port 322 of the worker module 310 is shown coupled to an output port of a first multiplexer 305 of the crossbar circuit 304, a first port 332 of the clock-data swap detection circuit 362, and a clock port 342 of a serial interface controller 340. Similarly, an internal data port 324 of the worker module 310 is shown coupled to an output port of a second multiplexer 306 of the crossbar circuit 304, a second port 334 of the clock-data swap detection circuit 362, and a data port 344 of the serial interface controller 340.

In some implementations, the two-wire serial interface can provide an external clock signal CLK (e.g., from clock port 107 of command module 105 of FIG. 1) to an external clock port 301 of the worker module 360. In some examples, the two-wire serial interface can provide an external data signal DATA (e.g., from data port 108 of command module 105 of FIG. 1) to an external data port 303 of the worker module 360. In some cases, the two-wire serial interface can be provided for communication between the worker module 360 and a command module (e.g., command module 105 of FIG. 1).

In the illustrated example of FIG. 3B, the clock-data swap detection circuit 362 can be configured to process a clock-data swap check command over the two-wire serial interface (e.g., from command module 105 of FIG. 1). In one illustrative example, the two-wire serial interface can conform to the MIPI SPMI protocol and/or a related protocol such as the MIPI RFFE protocol. As used herein, an external clock-data non-swapped state can refer to a configuration where an external clock signal CLK is coupled to an external clock port 301 of the worker module 360 and an external data signal DATA is coupled to an external data port 303 of the worker module 360. As used herein, an external clock-data swapped state can refer to a configuration where an external data signal DATA is coupled to an external clock port 301 of the worker module 360 and an external clock signal CLK is coupled to an external data port 303 of the worker module 360.

**In** some cases, based on the outcome of processing the clock-data swap check command, the clock-data swap detection circuit 362 can pass the external clock signal CLK and the external data signal DATA to the serial interface controller 340 in a swapped configuration or a non-swapped configuration. For example, if the clock-data swap detection circuit 362 processes the clock-data swap check command and determines that the external clock signal CLK is connected to the external data port 303 and external data signal DATA is connected to the external clock port 301 (e.g., the external clock-data swapped sate), the clock-data swap detection circuit 362 can swap the clock and data connections internally (e.g., in an internal clock-data swapped sate). In some cases, by swapping the clock and data connections internally, the clock-data swap detection circuit 362 can connect the clock port 342 of the serial interface controller 340 to the external clock signal CLK and can connect data port 344 of the serial interface controller 340 to the external data signal DATA such that the serial interface controller 340 can communicate with the command module (e.g., command module 105 of FIG. 1) in the presence of an external clock-data swapped state.

**In** another example, if the clock-data swap detection circuit 362 processes the clock-data swap check command and determines that the external clock signal CLK is connected to the clock port 301 and external data signal DATA is connected to the external data port 303 (e.g., the external clock-data non-swapped state), the clock-data swap detection circuit 362 may directly pass the external clock signal CLK and external data signal DATA through (e.g., the internal clock-data swapped state) to the clock port 342 and data port 344 of the serial interface controller 340, respectively. Accordingly, the clock-data swap detection circuit 362 can correctly connect the clock port 342 of the serial interface controller 340 to the external clock signal CLK input and can correctly connect data port 344 of the serial interface controller 340 to the external data signal DATA in the presence of an external clock-data non-swapped state.

As should be understood from the description above, by providing a clock-data swap detection circuit 362, a worker module 360 may be configurable to detect an external clock-data swapped state and in response configure the worker module 360 with an internal clock-data swapped state and/or to detect an external clock-data non-swapped state and in response configure the worker module 360 with an internal clock-data non-swapped state.

As illustrated in FIG. 3B, the clock-data swap detection circuit can utilize the counter 308 and comparison module 312 to process the clock-data swap check command. For example, the clock-data swap check command can be configured such that the counter 308 will reach a count equal to a target count 316 (TGT) when the worker module 360 received the clock-data swap check command with an external clock-data swapped state and an internal clock-data non-swapped state. In some cases, once the counter 308 reaches the target count 316, the clock-data swap detection circuit 362 can switch from the internal clock-data non-swapped state to the internal clock-data swapped state. As illustrated in FIG. 3B, once the clock-data swap detection circuit 362 determines that the clock-data swap check command indicates an external clock-data swapped state, a swap configuration control signal 318 can be latched to switch the crossbar circuit 304 to the internal clock-data swapped state until the worker module 360 is powered down. In some cases, the clock-data swap check command can be configured such that the counter 308 will not reach the target count 316 when the external swap state and the internal swap state match (e.g., both clock-data swapped or both clock-data non-swapped).

In some implementations, an optional clock-data swap enable module 326 can be used to enable or disable clock-data swap functionality for a worker module 360. As illustrated, the clock-data swap enable module 326 could be used with a modified signal path for the swap configuration control signal 318 as indicated by dashed lines. As shown in FIG. 3B, the example clock-data swap enable module 326 can include a digital logic AND gate. As illustrated, one input of the AND gate 328 can be the output of the latching module 314 and the other input of the AND gate 328 can be a swap enable signal 327. In some implementations, the swap enable signal 327 can be a one-time programmable value that determines whether a particular worker module 360 has clock-data swap functionality enabled.

It should be noted that the counter 308 could also reach the target count 316 if the worker module 360 has an external clock-data non-swapped state and an internal clock-data swapped state. However, in some implementations, the aforementioned state can be prevented from occurring by initializing the latching module 314 to output a swap configuration control signal 318 swap state signal value that initializes the crossbar circuit 304 in the internal clock-data non-swapped state. Since the clock-data swap detection circuit 362 is configured to only switch to the clock-data swapped state after determining that the external swap state and internal swap state do not match, the internal clock-data swapped state should only occur in conjunction with an external clock-data swapped state. In one illustrative example, the latching module 314 can be configured to initialize the swap configuration control signal 318 with a logical low value (e.g., logical "0" or "FALSE") that corresponds to an internal clock-data non-swapped state of the multiplexers 305, 306. In some cases, the multiplexers 305, 306 of the crossbar circuit 304 can be configured to pass a signal received at the external clock port 301 directly through to the internal clock port 322 and passing a signal received at the external data port 303 (e.g., DATA/CLK) directly through to the internal data port 324 in the internal clock-data non-swapped state.

It should be understood that different configurations for the clock-data swap detection circuit 362 can be used without departing from the scope of the present disclosure. In one illustrative example, the latching module 314 can be configured to output a swap configuration control signal 318 swap state signal value that initializes the crossbar circuit 304 in the internal clock-data swapped state. For example, the latching module 314 can be configured to initialize the swap configuration control signal 318 with a logical high output (e.g., logical "1" or "TRUE") value that corresponds to an internal clock-data swapped state of the multiplexers 305, 306. In such an example, the counter 308 can be configured increment in the event of an external clock-data non-swapped state and reset in the event of an external clock-data swapped state.

In some examples, the latching module 314 can have a reset pin coupled to a power-on-reset (POR) signal (not shown) to ensure that the clock-data swap detection circuit 362 initializes in the internal clock-data swapped state. In some implementations, the POR signal can be implemented as an active high POR signal or an active low POR signal (nPOR). In some cases, the serial interface controller 340 may also be reset by the POR (or nPOR) signal.

FIG. 4A through FIG. 4C illustrate how the clock-data swap detection circuit 362 of FIG. 3B can be used to provide robust detection of an external clock-data swap state. In particular, FIG. 4A through FIG. 4B illustrate the response of a counter (e.g., counter 308 of FIG. 3B) included in a clock-data swap detection circuit (e.g., clock-data swap detection circuit 362 of FIG. 3B) to a clock-data swap check command for an external clock-data swapped configuration and an external clock-data non-swapped configuration. FIG. 4C illustrates the response of a counter included in a clock-data swap detection circuit to a command other than the clock-data swap check command for an external clock-data non-swapped configuration. In the illustrated examples of FIG. 4A through FIG. 4C, a reference clock signal waveform 402 and a reference data signal waveform 404 are provided to illustrate an example instruction format for communication over the two-wire serial interface. In some implementations, the reference clock signal waveform 402 and reference data signal waveform 404 can comply with the MIPI SPMI standard and/or related standards (e.g., the MIPI RFFE standard).

As illustrated in FIG. 4A through FIG. 4C, a sequence start condition (SSC) 405 includes a rising edge and a falling edge of the data signal while the clock signal is held at a logical low value (e.g., logical "0" or "FALSE"). In some cases, the SSC can be used by the worker module (e.g., worker modules 110 of FIG. 1, worker module 310 of FIG. 3A, worker module 360 of FIG. 3B) and/or by the command module (e.g., command module 105 of FIG. 1) to indicate the start of a command sequence. In some cases, the SSC may prevent noise on the clock signal and/or data signal from being interpreted as an instruction by a serial interface controller (e.g., serial interface controller 340 of FIG. 3A and FIG. 3B). As shown in FIG. 4A through FIG. 4C, once the SSC is complete, the reference clock signal waveform 402 can include clock pulses while the reference data signal waveform 404 transmits a serial data sequence. In the illustrated example of FIG. 4A through FIG. 4C, the reference data signal waveform 404 includes four address bits [A3:A0], a static "1" bit, seven data bits [D6:D0], an optional parity bit, and a static "0" bit.

In some implementations, the SSC could potentially be used to provide a clock-data swap detection capability. However, noise and/or race conditions (e.g., during power-up) could potentially be misinterpreted as the SSC and result in an erroneous internal clock-data swap configuration and/or other failure of serial communication between a command module and a worker module.

In contrast, a clock-data swap detection circuit (e.g., clock-data swap detection circuit 302 of FIG. 3A, clock-data swap detection circuit 362 of FIG. 3B) can provide robust clock-data swap detection by checking for a sequence of multiple bits in a clock-data swap check command that is unlikely to occur as a result of noise and/or race conditions. In some cases, the clock-data swap detection check command can be sent multiple times during startup to ensure that an external clock-data swap state is properly detected by clock-data swap detection circuits of worker modules within a noisy environment.

FIG. 4A illustrates an example timing waveform 400 for a clock-data swap check command and corresponding response of the clock-data swap detection circuit of FIG. 3B for a clock-data non-swapped worker module. As illustrated in FIG. 4A, the counter nRST waveform 406 in the non-swapped configuration can be provided from an external clock signal CLK (e.g., external clock signal CLK of FIG. 3B) and as a result matches the reference clock signal waveform 402. For the non-swapped configuration, the counter CLK waveform 408 can be provided from an external data signal DATA (e.g., external data signal DATA of FIG. 3B). In the illustrated example, the clock-data swap check command waveform sent by the external data signal line corresponds to sending a hexadecimal data value of 0x7F to address 0xF which corresponds to a sequence of twelve consecutive clock bits of the counter CLK waveform 408 at a logical high value (e.g., logical "1" or "TRUE").

As illustrated in FIG. 4A, the count waveform 410 corresponding to the output of the counter (e.g., counter 308 of FIG. 3B) reaches a count of one (1) when a positive edge of the external data signal DATA goes high and the external clock signal CLK is high. However, after one-half clock cycle, the counter is reset by the logical low value (e.g., logical "0" or FALSE) of the external clock signal CLK coupled to the active low reset nRST of the counter. As shown in FIG. 4A, no additional positive edges of the external data signal DATA occur for the remainder of the clock-data swap command, and as a result the counter output stays at the logical low value (e.g., logical "0" or FALSE).

FIG. 4B illustrates an example timing waveform 420 for a clock-data swap check command and corresponding response of the clock-data swap detection circuit of FIG. 3B for a clock-data swapped worker module. As illustrated in FIG. 4B, the counter nRST waveform 426 in the swapped configuration can be provided from an external data signal DATA (e.g., external data signal DATA of FIG. 3A and/or FIG. 3B). For the swapped configuration, the counter CLK waveform 428 can be provided from an external clock signal CLK (e.g., external clock signal CLK of FIG. 3A and/or FIG. 3B) and as a result matches the reference clock signal waveform 402. In the illustrated example, the clock-data swap check command waveform sent by the external data signal line corresponds to sending a hexadecimal data value of 0x7F to address 0xF which corresponds to a sequence of twelve consecutive clock bits of the counter CLK waveform 408 at a logical high value (e.g., logical "1" or "TRUE"). T

As illustrated in FIG. 4B, the count waveform 430 corresponding to the output of the counter (e.g., counter 308 of FIG. 3B) is reset by the logical low level (e.g., logical "0" or "FALSE") of the external data signal DATA coupled to the counter active low reset nRST that occurs at the end of the SSC. As illustrated, the counter output can increment at each positive of the external clock signal CLK while the external data signal DATA is at a logical high level (e.g., logical "1" or "TRUE"). In some cases, once the count value reaches a target count value (e.g., target count 316 of FIG. 3B), a comparison module (e.g., comparison module 312 of FIG. 3B) can output a pulse to a latching module (e.g., latching module 314 of FIG. 3A and/or FIG. 3B). In one illustrative example, the target count can be equal to a decimal value of 12 which corresponds to a hexadecimal value of 0xC. For example, when there is no parity implemented (e.g., the parity bit value always has a logical low value (e.g., logical "0" or "FALSE")) or when an even parity is implemented, the counter value may reset on the next clock cycle after the count waveform 430 reaches 0xC (12). In another illustrative example, the target count (e.g., target count 316 of FIG. 3B) can be equal to a decimal value of 13, which corresponds to a hexadecimal value of 0xD. For example, when odd parity is implemented, the counter value may reset on the next clock cycle after the count waveform 430 reaches 0xD (13). For any other combination of address bits and data bits on the external data signal DATA received by the worker module, any logical low value will reset the counter, thereby preventing the count from reaching the target count.

In some implementations, the latching module (e.g., latching module 314 of FIG. 3A and/or FIG. 3B) can output a swap configuration control signal (e.g., swap configuration control signal 318 of FIG. 3A and/or FIG. 3B) that results in a crossbar circuit (e.g., crossbar circuit 304 of FIG. 3A and/or FIG. 3B) implementing an internal clock-data swapped state. As noted above, since the swap signal is latched, the internal clock-data swapped state can be maintained until the worker module is powered down.

As should be understood from the disclosure above, once an external clock-data swapped state is detected, the internal clock-data swapped state is implemented by the crossbar circuit (e.g., crossbar circuit 304 of FIG. 3A and/or FIG. 3B) of a worker module. Once the internal clock-data swapped state is implemented, the signals received by nRST and CLK pins of the counter (e.g., the counter 308 of FIG. 3B) can function identically to the case of an external clock-data non-swapped state with the worker module operating in an internal clock-data non-swapped state.

While the example timing waveforms 400 of FIG. 4A and timing waveforms 420 of FIG. 4B illustrate a counter (e.g., counter 308 of FIG. 3B) that is reset by an active low reset nRST and incremented by detecting a string of consecutive clock cycles at the CLK port of the counter while the nRST port has a logical high value (e.g., logical "1" or "TRUE"), it should be understood that the example timing waveforms 400 of FIG. 4A and timing waveforms 420 of FIG. 4B are provided for the purposes of illustration.

In some cases, the clock-data swap detection circuit 302 of FIG. 3A and/or the clock-data swap detection circuit 362 of FIG. 3B can be configured to perform clock-data swap detection based on different timing waveforms. For example, a counter (not shown) of a clock-data swap detection circuit can be configured with an active high RST (not shown) and reset by a logical high value (e.g., logical "1" or "TRUE"). In such an example, the counter 308 of FIG. 3B may be configured to increment by detecting a string of consecutive clock cycles at the CLK port of the counter while the RST port has a logical low value and (e.g., logical "0" or "FALSE").

Furthermore, as noted above, the clock-data swap detection circuit 302 of FIG. 3A can be configured to detect clock-data swap detection commands for different target values, and their corresponding waveforms, without departing from the scope of the present disclosure.

FIG. 4C illustrates an example timing waveform 440 for a register write command and corresponding response of the clock-data swap detection circuit 302 of FIG. 3B for an external clock-data non-swapped state of a worker module. As illustrated in FIG. 4C, the counter nRST waveform 446 in the non-swapped configuration can be provided from an external clock signal CLK (e.g., external clock signal CLK of FIG. 3B) and as a result matches the reference clock signal waveform 402. For the non-swapped configuration, the counter CLK waveform 448 can be provided from an external data signal DATA (e.g., external data signal DATA of FIG. 3B). In the illustrated example, the clock-data swap check command waveform sent by the external data signal line corresponds to sending a hexadecimal data value of 0x0F to address 0xC.

As illustrated in FIG. 4C, each time a positive edge occurs in the counter CLK waveform 448 (e.g., external data signal DATA), the count waveform 450 can increment to a value of one (1). Similar to the count waveform 410 of FIG. 4A, after one-half clock cycle, the count waveform 450 is reset by the logical low value (e.g., logical "0" or FALSE) of the external clock signal CLK coupled to the active low reset nRST of the counter. As shown in FIG. 4C, each additional positive edge of the external data signal DATA can similarly result in the count waveform 450 incrementing to one (1) for one-half clock cycle of the external clock signal CLK and resetting to zero (0) as soon as the external clock signal CLK reaches a logical low value (e.g., logical "0" or "FALSE").

In view of the above, the clock-data swap detection circuit 302 of FIG. 3A and/or the clock-data swap detection circuit 362 of FIG. 3B can provide for detection of an external clock-data swapped state by processing a clock-data swap check command. In some cases, worker modules can be initialized in an internal clock-data non-swapped state. In some cases, when a worker module has an external clock-data non-swapped state and the clock-data swap check command is processed by the clock-data swap detection circuit 302 of FIG. 3A and/or the clock-data swap detection circuit 362 of FIG. 3B, the clock-data swap detection circuit 302 of FIG. 3A and/or the clock-data swap detection circuit 362 of FIG. 3B can swap a crossbar circuit (e.g., crossbar circuit 304 of FIG. 3A and FIG. 3B) to an internal clock-data swapped state.

In addition, the clock-data swap detection circuit 302 and/or clock-data swap detection circuit 362 can be robust against incorrectly applying an internal clock-data swapped state while having an external clock-data non-swapped state. For example, when a worker module has an external clock-data non-swapped state, any command received on the two-wire serial interface may briefly increment the counter to a value of one (1) which will be reset on the next falling edge of the external clock signal CLK coupled to the counter nRST.

FIG. 5A is a flow diagram illustrating a process for detecting clock-data swaps for a serial communication interface. At block 502, the process 500 can include obtaining a clock-data swap check command.

At block 504, the process 500 can include determining, based on processing the clock-data swap check command, that an external clock-data swapped state is present at an external clock port of a WM and an external data port of the WM. In some cases, the external clock port is coupled to a first external serial signal and the external data port is coupled to a second external serial signal.

At block 506, the process 500 can include selecting, based on determining that the external clock-data swapped state is present at the external clock port and the external data port, an internal clock-data swapped configuration for a crossbar circuit. In some implementations, the crossbar circuit is selectably configurable to: couple the external clock port to an internal data port of the WM and couple the external data port to an internal clock port of the WM in an internal clock-data swapped configuration or couple the external clock port to the internal clock port and couple the external data port to the internal data port in an internal clock-data non-swapped configuration.

In some cases, determining that the external clock-data swapped state is present at the external clock port and the external data port includes counting, by a counter, a number of consecutive cycles of the first external serial signal. In some cases, the counter is enabled by a count enabling signal level of the second external serial signal. In some examples, the process 500 includes determining, by a comparison module, that a count output of the counter is equal to a target number of consecutive cycles, and selecting the internal clock-data swapped configuration for the crossbar circuit based on determining that the count output of the counter is equal to the target number of consecutive cycles. In some examples, selecting the internal clock-data swapped configuration includes outputting a clock-data swapped signal value of a swap configuration control signal to the crossbar circuit. In some implementations, the crossbar circuit is initialized in an internal clock-data non-swapped configuration. In some cases, the crossbar circuit is initialized in the internal clock-data swapped configuration.

In some examples, the internal clock port is coupled to a reset port of the counter and the internal data port is coupled to a clock port of the counter. In some implementations, the clock-data swap check command includes an SSC. In some case, the SSC includes a pulse of the second external serial signal while the first external serial signal is held at a constant value. In some cases, the SSC is followed by driving the second external serial signal to a constant signal level while the first external serial signal cycles for at least the target number of consecutive cycles. In some implementations, the clock-data swap check command complies with at least one of MIPI SPMI standard or MIPI RFFE standard.

FIG. 5B is a flow diagram illustrating a process for detecting clock-data swaps for a serial communication interface. At block 522, the process 520 can include obtaining a clock-data swap check command.

At block 524, the process 520 can include selecting, based on determining that the external clock-data non-swapped state is present at the external clock port and the external data port, an internal clock-data non-swapped configuration for a crossbar circuit. In some cases, the external clock port is coupled to a first external serial signal and the external data port is coupled to a second external serial signal.

At block 526, the process 520 can include selecting, based on determining that the external clock-data non-swapped state is present at the external clock port and the external data port, an internal clock-data non-swapped configuration for a crossbar circuit. In some implementations, the crossbar circuit is selectably configurable to: couple the external clock port to an internal data port of the WM and couple the external data port to an internal clock port of the WM in an internal clock-data swapped configuration or couple the external clock port to the internal clock port and couple the external data port to the internal data port in an internal clock-data non-swapped configuration.

In some cases, determining that the external clock-data non-swapped state is present at the external clock port and the external data port includes counting, by a counter, a number of consecutive cycles of the first external serial signal. In some cases, the counter is enabled by a count enabling signal level of the second external serial signal. In some examples, the process 500 includes determining, by a comparison module, that a count output of the counter is equal to a target number of consecutive cycles, and selecting the internal clock-data non-swapped configuration for the crossbar circuit based on determining that the count output of the counter is equal to the target number of consecutive cycles. In some examples, selecting the internal clock-data non-swapped configuration includes outputting a clock-data non-swapped value of a swap configuration control signal to the crossbar circuit. In some implementations, the crossbar circuit is initialized in an internal clock-data non-swapped configuration. In some cases, the crossbar circuit is initialized in the internal clock-data swapped configuration.

In some examples, the internal clock port is coupled to a reset port of the counter and the internal data port is coupled to a clock port of the counter. In some implementations, the clock-data swap check command includes an SSC. In some case, the SSC includes a pulse of the second external serial signal while the first external serial signal is held at a constant value. In some cases, the SSC is followed by driving the second external serial signal to a constant signal level while the first external serial signal cycles for at least the target number of consecutive cycles. In some implementations, the clock-data swap check command complies with at least one of MIPI SPMI standard or MIPI RFFE standard.

FIG. 5C is a flow diagram illustrating assigning addresses to WMs. At block 542, the process 540 can include transmitting a clock signal by an external clock signal line. In some cases, the external clock signal line is coupled to a first WM clock port of a first WM and a second WM data port of a second WM.

At block 544, the process 540 can include transmitting a data signal by an external data signal line. In some implementations, the external data signal line is coupled to a first WM data port of the first WM and a second WM clock port of the second WM.

At block 546, the process 540 can include assigning, based on transmitting the clock signal and the data signal, a first WM address to a first WM and a second WM address to a second WM. In some examples, the first WM and the second WM are provided with clock-data swap capability and the first WM address is different from the second WM address.

In some cases, the first WM is configured with an internal clock-data non-swapped configuration and the second WM is configured with an internal clock-data swapped configuration. In some examples, selecting the first WM for assigning the first WM address based on the first WM being configured with the internal clock-data non-swapped configuration and selecting the second WM for assigning the second WM address based on the second WM being configured with the internal clock-data swapped configuration. In some implementations, the first WM is configured in the internal clock-data non-swapped configuration based on processing a clock-data swap check command and the second WM is configured in the internal clock-data swapped configuration based on processing the clock-data swap check command.

In some cases, the process 540 includes broadcasting a chip select source to the first WM and the second WM. In some examples, the process 540 includes selecting an internal clock-data swap state of the first WM as the chip select source for the first WM and selecting an internal clock-data swap state of the second WM as the chip select source for the second WM. In some implementations, the process 540 includes assigning the first WM address to the first WM and assigning the second WM address to the second WM based on respective internal clock-data swap states of the first WM and the second WM.

In some cases, the first WM is a first FEM of a phased array antenna system and the second WM is a second FEM of the phased array antenna system.

In some cases, the process 540 includes driving an external chip select signal line, the first WM includes a first WM chip select port coupled to the external chip select signal line and the second WM includes a second WM chip select port coupled to the external chip select signal line. In some examples, the first WM chip select port is an RFIO port of the first WM and the second WM chip select port is an RFIO port of the second WM.

In some cases, one or more operations described herein can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which any operations are described is not intended to be construed as a limitation, and any number of the described operations can be combined in any order and/or in parallel to implement the processes.

FIG. 6 illustrates an example computing device architecture 600 of an example computing device which can implement various techniques and/or operations described herein. For example, the computing device architecture 600 can be used to implement at least some portions of the configuration 100 of FIG. 1, the configuration 200 of FIG. 2A, the configuration 240 of FIG. 2B, the configuration 280 of FIG. 2C, the schematic diagram 300 of FIG. 3A, and/or the schematic diagram 350 of FIG. 3B and perform at least some of the operations described herein. The components of the computing device architecture 600 are shown in electrical communication with each other using a connection 605, such as a bus. The example computing device architecture 600 includes a processing unit (CPU or processor) 610 and a computing device connection 605 that couples various computing device components including the computing device memory 615, such as read only memory (ROM) 620 and random access memory (RAM) 625, to the processor 610.

The computing device architecture 600 can include a cache of high-speed memory connected directly with, in close proximity to, or integrated as part of the processor 610. The computing device architecture 600 can copy data from the memory 615 and/or the storage device 630 to the cache 612 for quick access by the processor 610. In this way, the cache can provide a performance boost that avoids processor 610 delays while waiting for data. These and other modules can control or be configured to control the processor 610 to perform various actions. Other computing device memory 615 may be available for use as well. The memory 615 can include multiple different types of memory with different performance characteristics. The processor 610 can include any general purpose processor and a hardware or software service stored in storage device 630 and configured to control the processor 610 as well as a special-purpose processor where software instructions are incorporated into the processor design. The processor 610 may be a self-contained system, containing multiple cores or processors, a bus, memory controller, cache, etc. A multi-core processor may be symmetric or asymmetric.

To enable user interaction with the computing device architecture 600, an input device 645 can represent any number of input mechanisms, such as a microphone for speech, a touch-sensitive screen for gesture or graphical input, keyboard, mouse, motion input, speech and so forth. An output device 635 can also be one or more of a number of output mechanisms known to those of skill in the art, such as a display, projector, television, speaker device. In some instances, multimodal computing devices can enable a user to provide multiple types of input to communicate with the computing device architecture 600. The communication interface 640 can generally govern and manage the user input and computing device output. There is no restriction on operating on any particular hardware arrangement and therefore the basic features here may easily be substituted for improved hardware or firmware arrangements as they are developed.

Storage device 630 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 625, read only memory (ROM) 620, and hybrids thereof. The storage device 630 can include software, code, firmware, etc., for controlling the processor 610. Other hardware or software modules are contemplated. The storage device 630 can be connected to the computing device connection 605. In one aspect, a hardware module that performs a particular function can include the software component stored in a computer-readable medium in connection with the necessary hardware components, such as the processor 610, connection 605, output device 635, and so forth, to carry out the function.

The components of the computing device can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein. The computing device may further include a display (as an example of the output device or in addition to the output device), a network interface configured to communicate and/or receive the data, any combination thereof, and/or other component(s). The network interface may be configured to communicate and/or receive Internet Protocol (IP) based data or other type of data.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some examples, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using signals and/or computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific embodiments thereof, but those skilled in the art will recognize that the application is not limited thereto. Thus, while illustrative embodiments of the application have been described in detail herein, it is to be understood that the inventive concepts may be otherwise variously embodied and employed, and that the appended claims are intended to be construed to include such variations, except as limited by the prior art. Various features and aspects of the above-described application may be used individually or jointly. Further, embodiments can be utilized in any number of environments and applications beyond those described herein without departing from the broader spirit and scope of the specification. The specification and drawings are, accordingly, to be regarded as illustrative rather than restrictive. For the purposes of illustration, methods were described in a particular order. It should be appreciated that in alternate embodiments, the methods may be performed in a different order than that described.

One of ordinary skill will appreciate that the less than ("<") and greater than (">") symbols or terminology used herein can be replaced with less than or equal to (" ≤ ") and greater than or equal to (" ≥ ") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

Claim language or other language in the disclosure reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or Band C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The various illustrative logical blocks, modules, circuits, and algorithm steps described in connection with the examples disclosed herein may be implemented as electronic hardware, computer software, firmware, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication devices, or integrated circuit devices having multiple uses including application in wireless communications and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods, algorithms, and/or operations described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

While illustrative embodiments have been illustrated and described, it will be appreciated that various changes can be made therein without departing from the spirit and scope of the disclosure.

The following numbered paragraphs (paras.) contain further statements of various aspects of the present invention

Para 1. An apparatus for providing clock-data swap capability for a serial communication interface, the apparatus comprising:
an external clock port coupled to a first external serial signal;
an external data port coupled to a second external serial signal;
an internal clock port;
an internal data port;
a crossbar circuit selectably configurable to:
   couple the external clock port to the internal data port and couple the external data port to the internal clock port in an internal clock-data swapped configuration; or
   couple the external clock port to the internal clock port and couple the external data port to the internal data port in an internal clock-data non-swapped configuration; and
   a clock-data swap detection circuit and configured to:
      obtain a clock-data swap check command;
      determine, based on processing the clock-data swap check command, that an external clock-data swapped state is present at the external clock port and the external data port; and
      select, based on determining that the external clock-data swapped state is present at the external clock port and the external data port, the internal clock-data swapped configuration for the crossbar circuit.

Para 2. The apparatus of para 1, wherein, to determine that the external clock-data swapped state is present at the external clock port and the external data port, the clock-data swap detection circuit is configured to:
count, by a counter, a number of consecutive cycles of the first external serial signal, wherein the counter is enabled by a count enabling signal level of the second external serial signal;
determine, by a comparison module, that a count output of the counter is equal to a target number of consecutive cycles; and
select the internal clock-data swapped configuration for the crossbar circuit based on determining that the count output of the counter is equal to the target number of consecutive cycles.

Para 3. The apparatus of para 2, wherein selecting the internal clock-data swapped configuration comprises outputting a clock-data swapped signal value of a swap configuration control signal from the clock-data swap detection circuit to the crossbar circuit.

Para 4. The apparatus of para 2, wherein the clock-data swap detection circuit is configured to initialize the crossbar circuit in an internal clock-data non-swapped configuration.

Para 5. The apparatus of para 2, wherein the clock-data swap detection circuit is configured to initialize the crossbar circuit in the internal clock-data swapped configuration.

Para 6. The apparatus of para 2, wherein the internal clock port is coupled to a reset port of the counter and the internal data port is coupled to a clock port of the counter.

Para 7. The apparatus of para 2, wherein the clock-data swap check command comprises a sequence start condition (SSC), wherein the SSC includes a pulse of the second external serial signal while the first external serial signal is held at a constant value.

Para 8. The apparatus of para 7, wherein the SSC is followed by driving the second external serial signal to a constant signal level while the first external serial signal cycles for at least the target number of consecutive cycles.

Para 9. The apparatus of para 1, wherein the clock-data swap check command complies with at least one of:
MIPI SPMI standard; or
MIPI RFFE standard.

Para 10. A method for providing clock-data swap capability for a serial communication interface, the method comprising:
obtaining a clock-data swap check command;
determining, based on processing the clock-data swap check command, that an external clock-data swapped state is present at an external clock port of a WM and an external data port of the WM, wherein the external clock port is coupled to a first external serial signal and the external data port is coupled to a second external serial signal; and
selecting, based on determining that the external clock-data swapped state is present at the external clock port and the external data port, an internal clock-data swapped configuration for a crossbar circuit, wherein the crossbar circuit is selectably configurable to:
   couple the external clock port to an internal data port of the WM and couple the external data port to an internal clock port of the WM in an internal clock-data swapped configuration; or
   couple the external clock port to the internal clock port and couple the external data port to the internal data port in an internal clock-data non-swapped configuration.

Para 11. The method of para 10, wherein determining that the external clock-data swapped state is present at the external clock port and the external data port comprises:
counting, by a counter, a number of consecutive cycles of the first external serial signal, wherein the counter is enabled by a count enabling signal level of the second external serial signal;
determining, by a comparison module, that a count output of the counter is equal to a target number of consecutive cycles; and
selecting the internal clock-data swapped configuration for the crossbar circuit based on determining that the count output of the counter is equal to the target number of consecutive cycles.

Para 12. The method of para 11, wherein selecting the internal clock-data swapped configuration comprises outputting a clock-data swapped signal value of a swap configuration control signal to the crossbar circuit.

Para 13. The method of para 11, wherein the crossbar circuit is initialized in an internal clock-data non-swapped configuration.

Para 14. The method of para 11, wherein the crossbar circuit is initialized in the internal clock-data swapped configuration.

Para 15. The method of para 11, wherein the internal clock port is coupled to a reset port of the counter and the internal data port is coupled to a clock port of the counter.

Para 16. The method of para 11, wherein the clock-data swap check command comprises an SSC, wherein the SSC includes a pulse of the second external serial signal while the first external serial signal is held at a constant value.

Para 17. The method of para 16, wherein the SSC is followed by driving the second external serial signal to a constant signal level while the first external serial signal cycles for at least the target number of consecutive cycles.

Para 18. The method of para 10, wherein the clock-data swap check command complies with at least one of:
MIPI SPMI standard; or
MIPI RFFE standard.

Para 19. An apparatus for assigning addresses to worker modules (WMs) comprising:
a first WM comprising a first WM clock port coupled to an external clock signal line and a first WM data port coupled to an external data signal line, wherein the first WM is provided with clock-data swap capability;
a second WM comprising a second WM clock port coupled to the external data signal line and a second WM data port coupled to the external clock signal line, wherein the second WM is provided with clock-data swap capability; and
a command module (CM) comprising a CM clock port configured to drive the external clock signal line with a clock signal and a CM data port configured to drive the external data signal line with a data signal, wherein the CM is configured to assign a first WM address to the first WM and a second WM address to the second WM, wherein the second WM address is different from the first WM address.

Para 20. The apparatus of para 19, wherein:
the first WM is configured with an internal clock-data non-swapped configuration; and
the second WM is configured with an internal clock-data swapped configuration.

Para 21. The apparatus of para 20, wherein:
the CM selects the first WM for assigning the first WM address based on the first WM being configured with the internal clock-data non-swapped configuration; and
the CM selects the second WM for assigning the second WM address based on the second WM being configured with the internal clock-data swapped configuration.

Para 22. The apparatus of Para 20, wherein:
the first WM is configured in the internal clock-data non-swapped configuration based on processing a clock-data swap check command; and
the second WM is configured in the internal clock-data swapped configuration based on processing the clock-data swap check command.

Para 23. The apparatus of para 19, wherein the CM broadcasts a chip select source to the first WM and the second WM.

Para 24. The apparatus of para 23, wherein broadcasting the chip select source comprises:
selecting an internal clock-data swap state of the first WM as the chip select source for the first WM; and
selecting an internal clock-data swap state of the second WM as the chip select source for the second WM.

Para 25. The apparatus of para 24, wherein the CM assigns the first WM address to the first WM and assigns the second WM address to the second WM based on respective internal clock-data swap states of the first WM and the second WM.

Para 26. The apparatus of para 19, wherein the first WM is a first front-end module (FEM) of a phased array antenna system and the second WM is a second FEM of the phased array antenna system.

Para 27. The apparatus of para 19, wherein:
the first WM comprises a first WM chip select port coupled to an external chip select signal line;
the second WM comprises a second WM chip select port coupled to the external chip select signal line; and
the CM comprises a CM chip select port configured to drive the external chip select signal line.

Para 28. The apparatus of para 27, wherein:
the first WM chip select port is an RFIO port of the first WM;
the second WM chip select port is an RFIO port of the second WM; and
the CM chip select port is an RFIO port of the CM.

Para 29. A method for assigning addressed to WMs comprising:
transmitting a clock signal by an external clock signal line, wherein the external clock signal line is coupled to a first WM clock port of a first WM and a second WM data port of a second WM;
transmitting a data signal by an external data signal line, wherein the external data signal line is coupled to a first WM data port of the first WM and a second WM clock port of the second WM; and
assigning, based on transmitting the clock signal and the data signal, a first WM address to a first WM and a second WM address to a second WM, wherein:
   the first WM and the second WM are provided with clock-data swap capability; and
   the first WM address is different from the second WM address.

Para 30. The method of para 29, wherein:
the first WM is configured with an internal clock-data non-swapped configuration; and
the second WM is configured with an internal clock-data swapped configuration.

Para 31. The method of para 30, further comprising:
selecting the first WM for assigning the first WM address based on the first WM being configured with the internal clock-data non-swapped configuration; and
selecting the second WM for assigning the second WM address based on the second WM being configured with the internal clock-data swapped configuration.

Para 32. The method of para 30, wherein:
the first WM is configured in the internal clock-data non-swapped configuration based on processing a clock-data swap check command; and
the second WM is configured in the internal clock-data swapped configuration based on processing the clock-data swap check command.

Para 33. The method of para 29, further comprising broadcasting a chip select source to the first WM and the second WM.

Para 34. The method of para 33, further comprising:
selecting an internal clock-data swap state of the first WM as the chip select source for the first WM; and
selecting an internal clock-data swap state of the second WM as the chip select source for the second WM.

Para 35. The method of para 34, further comprising assigning the first WM address to the first WM and assigning the second WM address to the second WM based on respective internal clock-data swap states of the first WM and the second WM.

Para 36. The method of para 29, wherein the first WM is a first FEM of a phased array antenna system and the second WM is a second FEM of the phased array antenna system.

Para 37. The method of para 29, further comprising driving an external chip select signal line, wherein:
the first WM comprises a first WM chip select port coupled to the external chip select signal line; and
the second WM comprises a second WM chip select port coupled to the external chip select signal line.

Para 38. The method of para 37, wherein:
the first WM chip select port is an RFIO port of the first WM; and
the second WM chip select port is an RFIO port of the second WM.

Para 39. An apparatus for providing a serial communication interface with swappable clock and data signals, the apparatus comprising:
an external clock port coupled to a first external serial signal;
an external data port coupled to a second external serial signal;
an internal clock port;
an internal data port;
a crossbar circuit selectably configurable to:
   couple the external clock port to the internal data port and couple the external data port to the internal clock port in an internal clock-data swapped configuration; or
   couple the external clock port to the internal clock port and couple the external data port to the internal data port in an internal clock-data non-swapped configuration; and
   a clock-data swap detection circuit and configured to:
      obtain a clock-data swap check command;
      determine, based on processing the clock-data swap check command, that an external clock-data non-swapped state is present at the external clock port and the external data port; and
      select, based on determining that the external clock-data non-swapped state is present at the external clock port and the external data port, the internal clock-data non-swapped configuration for the crossbar circuit.

Para 40. The apparatus of para 39, wherein, to determine that the external clock-data non-swapped state is present at the external clock port and the external data port, the clock-data swap detection circuit is configured to:
count, by a counter, a number of consecutive cycles of the first external serial signal, wherein the counter is enabled by a count enabling signal level of the second external serial signal;
determine, by a comparison module, that a count output of the counter is equal to a target number of consecutive cycles; and
select the internal clock-data swapped configuration for the crossbar circuit based on determining that the count output of the counter is equal to the target number of consecutive cycles.

Para 41. The apparatus of para 40, wherein selecting the internal clock-data non-swapped configuration comprises outputting a clock-data non-swapped value of a swap configuration control signal from the clock-data swap detection circuit to the crossbar circuit.

Para 42. The apparatus of para 41, wherein the clock-data swap detection circuit is configured to initialize the crossbar circuit in an internal clock-data non-swapped configuration.

Para 43. The apparatus of para 42, wherein the clock-data swap detection circuit is configured to initialize the crossbar circuit in the internal clock-data swapped configuration.

Para 44. The apparatus of para 40, wherein the internal clock port is coupled to a reset port of the counter and the internal data port is coupled to a clock port of the counter.

Para 45. The apparatus of para 40, wherein the clock-data swap check command comprises an SSC, wherein the SSC includes a pulse of the second external serial signal while the first external serial signal is held at a constant value.

Para 46. The apparatus of para 45 wherein the SSC is followed by driving the second external serial signal to a constant signal level while the first external serial signal cycles for at least the target number of consecutive cycles.

Para 47. The apparatus of para 39, wherein the clock-data swap check command complies with at least one of:
MIPI SPMI standard; or
MIPI RFFE standard.

Para 48. A method for providing a serial communication interface with swappable clock and data signals, the method comprising:
obtaining a clock-data swap check command;
determining, based on processing the clock-data swap check command, that an external clock-data non-swapped state is present at an external clock port of a WM and an external data port of the WM, wherein the external clock port is coupled to a first external serial signal and the external data port is coupled to a second external serial signal; and
selecting, based on determining that the external clock-data non-swapped state is present at the external clock port and the external data port, an internal clock-data non-swapped configuration for a crossbar circuit, wherein the crossbar circuit is selectably configurable to:
   couple the external clock port to an internal data port of the WM and couple the external data port to an internal clock port of the WM in an internal clock-data swapped configuration; or
   couple the external clock port to the internal clock port and couple the external data port to the internal data port in an internal clock-data non-swapped configuration.

Para 49. The method of para 48, wherein determining that the external clock-data non-swapped state is present at the external clock port and the external data port comprises:
counting, by a counter, a number of consecutive cycles of the first external serial signal, wherein the counter is enabled by a count enabling signal level of the second external serial signal;
determining, by a comparison module, that a count output of the counter is equal to a target number of consecutive cycles; and
selecting the internal clock-data non-swapped configuration for the crossbar circuit based on determining that the count output of the counter is equal to the target number of consecutive cycles.

Para 50. The method of para 49, wherein selecting the internal clock-data non-swapped configuration comprises outputting a clock-data non-swapped value of a swap configuration control signal to the crossbar circuit.

Para 51. The method of para 49, wherein the crossbar circuit is initialized in the internal clock-data non-swapped configuration.

Para 52. The method of para 49, wherein the crossbar circuit is initialized in an internal clock-data swapped configuration.

Para 53. The method of para 49, wherein the internal clock port is coupled to a reset port of the counter and the internal data port is coupled to a clock port of the counter.

Para 54. The method of para 49, wherein the clock-data swap check command comprises an SSC, wherein the SSC includes a pulse of the second external serial signal while the first external serial signal is held at a constant value.

Para 55. The method of para 54, wherein the SSC is followed by driving the second external serial signal to a constant signal level while the first external serial signal cycles for at least the target number of consecutive cycles.

Para 56. The method of para 48, wherein the clock-data swap check command complies with at least one of:
MIPI SPMI standard; or
MIPI RFFE standard.

## Claims

1. An apparatus for providing clock-data swap capability for a serial communication interface, the apparatus comprising:
an external clock port coupled to a first external serial signal;
an external data port coupled to a second external serial signal;
an internal clock port;
an internal data port;
a crossbar circuit selectably configurable to:
couple the external clock port to the internal data port and couple the external data port to the internal clock port in an internal clock-data swapped configuration; or
couple the external clock port to the internal clock port and couple the external data port to the internal data port in an internal clock-data non-swapped configuration; and
a clock-data swap detection circuit and configured to:
obtain a clock-data swap check command;
determine, based on processing the clock-data swap check command, that an external clock-data swapped state is present at the external clock port and the external data port; and
select, based on determining that the external clock-data swapped state is present at the external clock port and the external data port, the internal clock-data swapped configuration for the crossbar circuit.

2. The apparatus of claim 1, wherein, to determine that the external clock-data swapped state is present at the external clock port and the external data port, the clock-data swap detection circuit is configured to:
count, by a counter, a number of consecutive cycles of the first external serial signal, wherein the counter is enabled by a count enabling signal level of the second external serial signal;
determine, by a comparison module, that a count output of the counter is equal to a target number of consecutive cycles; and
select the internal clock-data swapped configuration for the crossbar circuit based on determining that the count output of the counter is equal to the target number of consecutive cycles.

3. The apparatus of claim 2, wherein selecting the internal clock-data swapped configuration comprises outputting a clock-data swapped signal value of a swap configuration control signal from the clock-data swap detection circuit to the crossbar circuit.

4. The apparatus of claim 2, wherein the clock-data swap detection circuit is configured to initialize the crossbar circuit in the internal clock-data swapped configuration.

5. The apparatus of claim 2, wherein the internal clock port is coupled to a reset port of the counter and the internal data port is coupled to a clock port of the counter.

6. The apparatus of claim 2, wherein the clock-data swap check command comprises a sequence start condition (SSC), wherein the SSC includes a pulse of the second external serial signal while the first external serial signal is held at a constant value.

7. The apparatus of claim 6, wherein the SSC is followed by driving the second external serial signal to a constant signal level while the first external serial signal cycles for at least the target number of consecutive cycles.

8. A method for providing clock-data swap capability for a serial communication interface, the method comprising:
obtaining a clock-data swap check command;
determining, based on processing the clock-data swap check command, that an external clock-data swapped state is present at an external clock port of a WM and an external data port of the WM, wherein the external clock port is coupled to a first external serial signal and the external data port is coupled to a second external serial signal; and
selecting, based on determining that the external clock-data swapped state is present at the external clock port and the external data port, an internal clock-data swapped configuration for a crossbar circuit, wherein the crossbar circuit is selectably configurable to:
couple the external clock port to an internal data port of the WM and couple the external data port to an internal clock port of the WM in an internal clock-data swapped configuration; or
couple the external clock port to the internal clock port and couple the external data port to the internal data port in an internal clock-data non-swapped configuration.

9. The method of claim 8, wherein determining that the external clock-data swapped state is present at the external clock port and the external data port comprises:
counting, by a counter, a number of consecutive cycles of the first external serial signal, wherein the counter is enabled by a count enabling signal level of the second external serial signal;
determining, by a comparison module, that a count output of the counter is equal to a target number of consecutive cycles; and
selecting the internal clock-data swapped configuration for the crossbar circuit based on determining that the count output of the counter is equal to the target number of consecutive cycles.

10. The method of claim 9, wherein selecting the internal clock-data swapped configuration comprises outputting a clock-data swapped signal value of a swap configuration control signal to the crossbar circuit.

11. The method of claim 9, wherein the crossbar circuit is initialized in the internal clock-data swapped configuration.

12. The method of claim 9, wherein the internal clock port is coupled to a reset port of the counter and the internal data port is coupled to a clock port of the counter.

13. The method of claim 9, wherein the clock-data swap check command comprises an SSC, wherein the SSC includes a pulse of the second external serial signal while the first external serial signal is held at a constant value.

14. The method of claim 13, wherein the SSC is followed by driving the second external serial signal to a constant signal level while the first external serial signal cycles for at least the target number of consecutive cycles.

15. The apparatus of claim 1 or the method of claim 8, wherein the clock-data swap check command complies with at least one of:
MIPI SPMI standard; or
MIPI RFFE standard.
